(19) Europäisches Patentamt
European Patent Office
Office européen des brevets

(11) EP 3 707 213 B1

(12) EUROPÄISCHE PATENTSCHRIFT

(45) Veröffentlichungstag und Bekanntmachung des Hinweises auf die Patenterteilung:
**27.11.2024 Patentblatt 2024/48**

(21) Anmeldenummer: **18796933.2**

(22) Anmeldetag: **05.11.2018**

(51) Internationale Patentklassifikation (IPC):
***C09D 5/03*** $^{(2006.01)}$ ***C09D 5/08*** $^{(2006.01)}$
***C08F 265/06*** $^{(2006.01)}$ ***C09D 151/00*** $^{(2006.01)}$

(52) Gemeinsame Patentklassifikation (CPC):
(C-Sets verfügbar)
**C08F 265/06; C09D 5/038; C09D 5/086; C09D 7/65; C09D 151/003** (Forts.)

(86) Internationale Anmeldenummer:
**PCT/EP2018/080099**

(87) Internationale Veröffentlichungsnummer:
**WO 2019/091889 (16.05.2019 Gazette 2019/20)**

(54) **WÄSSRIGE POLYMERDISPERSIONEN**
AQUEOUS POLYMER DISPERSIONS
DISPERSIONS POLYMÈRES AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2017 EP 17201136**

(43) Veröffentlichungstag der Anmeldung:
**16.09.2020 Patentblatt 2020/38**

(73) Patentinhaber: **BASF SE**
**67056 Ludwigshafen am Rhein (DE)**

(72) Erfinder:
- **KAINZ, Quirin Maximilian**
**67056 Ludwigshafen (DE)**
- **TROMSDORF, Ulrich**
**67056 Ludwigshafen (DE)**
- **DARGATZ, Manfred**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-A1- 0 960 889**
**WO-A1-2009/115607**
**WO-A1-2016/071326**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 707 213 B1

(52) Gemeinsame Patentklassifikation (CPC): (Forts.)

C-Sets
**C08F 265/06, C08F 220/18;**
C08F 265/06, C08F 220/1804;
C08F 265/06, C08F 220/1808

## Beschreibung

Gegenstand der vorliegenden Erfindung ist ein Verfahren zur Herstellung einer wässrigen Polymerdispersion durch radikalisch initiierte wässrige Emulsionspolymerisation, welches dadurch gekennzeichnet ist, dass in einem wässrigen Medium in Gegenwart wenigstens eines phosphorgruppenhaltigen Dispergierhilfsmittels in einer ersten Polymerisationsstufe (Polymerisationsstufe 1)

| | |
|---|---|
| ≥ 1,0 und ≤ 3,0 Gew.-% | wenigstens einer α,β-monoethylenisch ungesättigten $C_3$- bis $C_6$-Mono- oder Dicarbonsäure (Monomere A1), |
| ≥ 1,5 und ≤ 6,0 Gew.-% | wenigstens einer ethylenisch ungesättigten Verbindung, welche wenigstens eine phosphorhaltige Gruppe aufweist (Monomere A2), |
| ≥ 91,0 und ≤ 97,5 Gew.-% | wenigstens einer ethylenisch ungesättigten Verbindung, welche sich von den Monomeren A1 und A2 unterscheidet (Monomere A3), |

wobei sich die Mengen der Monomeren A1 bis A3 auf 100 Gew.-% aufsummieren (Gesamtmonomerenmenge 1), radikalisch zu einem Polymeren 1 polymerisiert werden, und daran anschließend in Anwesenheit des Polymeren 1 in einer zweiten Polymerisationsstufe (Polymerisationsstufe 2)

| | |
|---|---|
| ≤ 0,1 Gew.-% | wenigstens einer α,β-monoethylenisch ungesättigten $C_3$- bis $C_6$-Mono- oder Dicarbonsäure (Monomere B1), |
| ≤ 0,1 Gew.-% | wenigstens einer ethylenisch ungesättigten Verbindung, welche wenigstens eine phosphorhaltige Gruppe aufweist (Monomere B2), |
| ≥ 99,8 und ≤ 100 Gew.-% | wenigstens einer ethylenisch ungesättigten Verbindung, welche sich von den Monomeren B1 und B2 unterscheidet (Monomere B3), |

wobei sich die Mengen der Monomeren B1 bis B3 auf 100 Gew.-% aufsummieren (Gesamtmonomerenmenge 2), radikalisch zu einem Polymeren 2 polymerisiert werden, mit der Maßgabe, dass

- die Art und Mengen der Monomeren A1 bis A3 so gewählt werden, dass das daraus erhaltene Polymer 1 eine Glasübergangstemperatur $Tg^1$ im Bereich ≥ -10 und ≤ 15 °C aufweist,
- die Art und Mengen der Monomeren B1 bis B3 so gewählt werden, dass das daraus erhaltene Polymer 2 eine Glasübergangstemperatur $Tg^2$ aufweist, welche wenigstens 10 °C über der Glasübergangstemperatur $Tg^1$ liegt [$Tg^2 = Tg^1 + \geq 10$ °C],
- das Verhältnis von Gesamtmonomerenmenge 1 zu Gesamtmonomerenmenge 2 70 bis 85 Gew.-% zu 15 bis 30 Gew.-% beträgt, und
- die Menge des wenigstens einen phosphorgruppenhaltigen Dispergiermittels ≥ 0,5 Gew.-% bezogen auf die Summe aus Gesamtmonomerenmenge 1 und Gesamtmonomerenmenge 2 (Gesamtmonomerenmenge) beträgt.

Gegenstand der vorliegenden Erfindung sind ferner die nach den Verfahren zugänglichen wässrigen Polymerdispersionen sowie deren Verwendung in den unterschiedlichsten Anwendungsgebieten, insbesondere in Korrosionsschutzbeschichtungen.

Bei den mehrstufigen phosphorgruppenhaltigen wässrigen Polymerdispersionen ist von folgendem relevanten Stand der Technik auszugehen.

So offenbart die EP-A 1193298 wässrige Polymerdispersionen deren Polymere Monomere mit einer starken Säuregruppe in einpolymerisierter Form enthalten, wobei unter einer starken Säuregruppe solche verstanden werden sollen, welche bei 20 °C einen pKa-Wert von < 4 aufweisen sollen, wie beispielsweise Sulfonsäure- oder Phosphorsäuregruppen. Optional können diese Polymerisate auch noch in untergeordneten Mengen Carbonsäuremonomeren in einpolymerisierter Form enthalten. Dabei erfolgt die Polymerisationsreaktion unter stark sauren Bedingungen. Eine gegebenenfalls erforderliche Neutralisation erfolgt erst im Anschluss an die Polymerisationsreaktion. Die dabei erhaltenen wässrigen Polymerdispersionen eignen sich vorteilhaft als Bindemittel in Korrosionschutzformulierungen und Beschichtungen mit hohen Glanzanforderungen.

Die WO 2016/071326 lehrt ein Verfahren zur Herstellung einer wässrigen Polymerdispersion in einem zweistufigen Polymerisationsverfahren, wobei in der ersten Polymerisationsstufe in Gegenwart eines Sulfat- oder Sulfonatgruppengruppenhaltigen Dispergierhilfsmittels und in der zweiten Polymerisationsstufe in Gegenwart eines Phosphat- oder Phosphonatgruppenhaltigen Dispergierhilfsmittels polymerisiert wird.

Die EP 0960889 lehrt eine wässrige Polymerdispersion, die erhältlich ist mittels Emulsionspolymerisation eines

Monomerengemisches in Gegenwart eines Schutzkolloids, welches aufgebaut ist aus Vinylphosphonsäure und Alkylacrylaten. Die hiernach erhaltenen Polymerdispersionen eignen sich vorteilhaft als Bindemittel in Korrosionsschutzformulierungen.

In der EP-A 2426155 werden Dispersionen mehrstufiger Dispersionspolymerisate, enthaltend in einpolymerisierter Form phosphorsäuregruppenhaltige Monomere, und deren Verwendung in Beschichtungsformulierungen offenbart. Kennzeichnend für die Herstellung der Dispersionspolymerisate ist die gepulste Dosierung der phosphorgruppenhaltigen Monomeren, wobei diese so erfolgen soll, dass 75 bis 100 Gew.-% der phosphorgruppenhaltigen Monomeren innerhalb des Zeitraums zugegeben werden sollen, während dessen 10 bis 50 Gew.-% der Gesamtmonomerenmenge zugegeben werden. Auch hierbei erfolgt die Polymerisationsreaktion unter stark sauren Bedingungen. Eine gegebenenfalls erforderliche Neutralisation erfolgt erst im Anschluss an die Polymerisationsreaktion. Die dabei erhaltenen Polymerdispersionsteilchen sollen sich vorteilhaft zur Adsorption an Titandioxidpartikeln eignen, so dass diese insbesondere in Titandioxid-haltigen Beschichtungsformulierungen eingesetzt werden.

Nachteilig an den vorgenannten Verfahrensweisen ist, dass die technisch üblichen Edelstahlpolymerisationsreaktoren für die Polymerisationsreaktionen im stark sauren Medium aufgrund von flächiger Korrosion und/oder punktueller Lochfraßkorrosion ungeeignet sind, so dass hierfür spezielle teure innenbeschichtete Polymerisationsreaktoren oder Polymerisationsreaktoren aus Titan erforderlich werden. Darüber hinaus sind die erhaltenen wässrigen Polymerdispersionen bei zusätzlicher Verwendung von funktionalen Monomeren bei der Polymerisationsreaktion instabil und neigen zu erhöhter Koagulatbildung oder sogar zur Koagulation. Des Weiteren vermögen wässrige Korrosionsschutzbeschichtungen, welche die nach vorgenannten Verfahren erhaltenen wässrigen Polymerdispersionen als Bindemittel enthalten, nicht in allen Belangen voll zu überzeugen.

Aufgabe der vorliegenden Erfindung war es daher, ein Verfahren zur Herstellung einer wässrigen Dispersion von phosphorgruppenhaltigen Dispersionspolymerisaten zur Verfügung zu stellen, deren Herstellung in technisch üblichen Polymerisationsreaktoren erfolgen kann, wobei die erhaltene wässrige Polymerisatdispersion stabil ist und einen geringen Feinkoagulatgehalt aufweist und darüber hinaus bei ihrer Verwendung in Korrosionsschutzbeschichtungen verbesserte Frühwasserbeständigkeit, geringere Flächenkorrosion, geringere Unterrostung ausgehend von einem Ritz sowie verbesserte Haftungseigenschaften aufweist.

Die Aufgabe wurde durch das eingangs definierten Verfahren bzw. durch dieses Verfahren zugänglichen wässrigen Polymerisatdispersionen gelöst.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich das erfindungsgemäße Verfahren lediglich dadurch, dass es zweistufig unter Einhaltung der genannten Rahmenparameter sowie der spezifischen Monomerenzusammensetzungen und einer spezifischen pH-Führung durchgeführt wird.

Zur Herstellung der mit dem erfindungsgemäßen Verfahren zugänglichen wässrigen Polymerdispersionen durch zweistufige wässrige Emulsionspolymerisation können nachfolgende ethylenisch ungesättigte Monomere A1, A2, A3, B1, B2 und B3 eingesetzt werden.

Als Monomere A1 können alle $\alpha,\beta$-monoethylenisch ungesättigten $C_3$- bis $C_6$-Mono- oder Dicarbonsäuren eingesetzt werden. Als $C_3$- bis $C_6$-, bevorzugt $C_3$- oder $C_4$-Mono- oder Dicarbonsäuren seien beispielsweise Acrylsäure, Methacrylsäure, Ethylacrylsäure, Itaconsäure, Allylessigsäure, Crotonsäure, Vinylessigsäure, Vinylmilchsäure, Fumarsäure, Maleinsäure, 2-Methylmaleinsäure genannt. Die Monomeren A1 umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid.

Mit besonderem Vorteil werden als Monomere A1 Acrylsäure, Methacrylsäure, Itaconsäure, Fumarsäure, Maleinsäure und/oder Crotonsäure eingesetzt.

Die Gesamtmenge an Monomeren A1 beträgt $\geq$ 1,0 und $\leq$ 3,0 Gew.-%, vorteilhaft $\geq$ 1,0 und $\leq$ 2,0 Gew.-% und

insbesondere vorteilhaft ≥ 1,1 und ≤ 1,8 Gew.-%, jeweils bezogen auf die Gesamtmonomerenmenge 1.

Als Monomere A2 kommen alle ethylenisch ungesättigten Verbindungen in Betracht, welche wenigstens eine phosphorhaltige Gruppe aufweisen. Beispiele hierfür sind Vinylphosphonsäure und/oder ein (Meth)acryloxy(poly)alkoxyphosphat, wobei das (Meth)acryloxy(poly)alkoxyphosphat folgende Formel I aufweist:

$$H_2C{=}CH(H/CH_3)\text{-}C({=}O)\text{-}[AO]_x\text{-}O\text{-}P({=}O)(\text{-}OH)_2, \qquad \text{Formel (I)}$$

wobei

AO: für eine Ethylenoxy- $[-OCH_2CH_2-]$, eine Propylenoxy- $[-OCH(CH_3)CH_2-]$, eine Butylenoxygruppe $[-OCH(C_2H_5)CH_2-]$ oder Gemische davon steht, wobei die Ethylenoxygruppe und/oder Proplylenoxygruppe bevorzugt sind, und

x: für eine Zahl zwischen 1 und 30 steht, wobei Zahlen zwischen 1 und 20 bevorzugt und Zahlen zwischen 1 und 10 ganz besonders bevorzugt sind.

Als (Meth)acryloxy(poly)alkoxyphosphate explizit genannt seien Verbindungen der folgenden Formeln:

$$H_2C{=}CH\text{-}C({=}O)\text{-}OCH_2CH_2\text{-}O\text{-}P({=}O)(\text{-}OH)_2$$

$$H_2C{=}CH\text{-}C({=}O)\text{-}OCH(CH_3)CH_2\text{-}O\text{-}P({=}O)(\text{-}OH)_2$$

$$H_2C{=}C(CH_3)\text{-}C({=}O)\text{-}OCH_2CH_2\text{-}O\text{-}P({=}O)(\text{-}OH)_2$$

$$H_2C{=}C(CH_3)\text{-}C({=}O)\text{-}OCH(CH_3)CH_2\text{-}O\text{-}P({=}O)(\text{-}OH)_2$$

$$H_2C{=}CH\text{-}C({=}O)\text{-}[OCH_2CH_2]_{4\text{-}7}\text{-}O\text{-}P({=}O)(\text{-}OH)_2$$

$$H_2C{=}CH\text{-}C({=}O)\text{-}[OCH(CH_3)CH_2]_{4\text{-}7}\text{-}O\text{-}P({=}O)(\text{-}OH)_2$$

$$H_2C{=}C(CH_3)\text{-}C({=}O)\text{-}[OCH_2CH_2]_{4\text{-}7}\text{-}O\text{-}P({=}O)(\text{-}OH)_2$$

$$H_2C{=}C(CH_3)\text{-}C({=}O)\text{-}[OCH(CH_3)CH_2]_{4\text{-}7}\text{-}O\text{-}P({=}O)(\text{-}OH)_2$$

und insbesondere bevorzugt

$$H_2C{=}C(CH_3)\text{-}C({=}O)\text{-}[OCH_2CH_2]_{4\text{-}7}\text{-}O\text{-}P({=}O)(\text{-}OH)_2$$

$$H_2C{=}C(CH_3)\text{-}C({=}O)\text{-}[OCH(CH_3)CH_2]_{4\text{-}7}\text{-}O\text{-}P({=}O)(\text{-}OH)_2$$

$$H_2C{=}CH\text{-}C({=}O)\text{-}[OCH(CH_3)CH_2]_{4\text{-}7}\text{-}O\text{-}P({=}O)(\text{-}OH)_2$$

$$H_2C{=}CH\text{-}C({=}O)\text{-}OCH_2CH_2\text{-}O\text{-}P({=}O)(\text{-}OH)_2$$

$$H_2C{=}C(CH_3)\text{-}C({=}O)\text{-}OCH_2CH_2\text{-}O\text{-}P({=}O)(\text{-}OH)_2$$

Vorgenannte bevorzugte (Meth)acryloxy(poly)alkoxyphosphate sind im Handel erhältlich, beispielsweise als Sipomer® PAM-100, Sipomer® PAM-200, Sipomer® PAM-300 oder Sipomer® PAM-4000 der Firma Solvay/Rhodia sowie 2-(Methacryloyloxy)ethylphosphat der Firma Sigma-Aldrich/Merck KGaA.

Selbstverständlich umfassen die Monomeren A1 und A2 auch die voll- oder teilneutralisierten wasserlöslichen Salze, insbesondere die Alkalimetall- oder Ammoniumsalze, der vorgenannten Säuren.

Die Gesamtmenge an Monomeren A2 beträgt ≥ 1,5 und ≤ 6,0 Gew.-%, vorteilhaft ≥ 1,5 und ≤ 5,0 Gew.-% und insbesondere vorteilhaft ≥ 1,5 und ≤ 4,0 Gew.-%, jeweils bezogen auf die Gesamtmonomerenmenge 1.

Als Monomere A3 können alle ethylenisch ungesättigten Verbindungen eingesetzt werden, welche sich von den Monomeren A1 und A2 unterscheiden, wie beispielsweise (Meth)acrylsäurealkylester, wobei bevorzugt solche (Meth)acrylsäurealkylester umfasst sein sollen, deren linearer oder verzweigter Alkylrest 1 bis 20 Kohlenstoffatome aufweist, besonders bevorzugt 1 bis 10 und ganz besonders bevorzugt 1 bis 8 Kohlenstoffatome. Von Bedeutung in diesem Zusammenhang ist, dass die Schreibweise ("Meth)acrylsäure"verbindungen bzw. "(Meth)acrylat"verbindungen generell sowohl die entsprechenden Acrylsäureverbindungen wie auch die entsprechenden Methacrylsäureverbindungen umfassen soll.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-n-pentylester, (Meth)acrylsäure-iso-pentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und/oder (Meth)acrylsäure-n-dodecylester.

Als (Meth)acrylsäurealkylester bevorzugt sind Methylmethacrylat, Methylacrylat, Ethylacrylat, n-Butylacrylat, n-Butylmethacrylat, n-Hexylacrylat, n-Octylacrylat, 2-Ethylhexylacrylat und/oder 3-Propylheptylacrylat.

Als Monomere A3 kommen vorteilhaft auch Vinylaromaten mit bis zu 20 C-Atomen in Betracht.

Bei den Vinylaromaten mit bis zu 20 C-Atomen handelt es sich um optional substituierte aromatische Systeme mit einer Vinylgruppe, die sich in Konjugation zum aromatischen Ringsystem befindet.

Solche substituierten Vinylaromaten weisen häufig eine oder mehrere, bevorzugt eine 1 bis 10 Kohlenstoffatome, oft 1 bis 6 und bevorzugt 1 bis 4 Kohlenstoffatome aufweisende lineare oder verzweigte Alkylgruppen auf, die sich am Aromaten oder an der Vinylgruppe befinden kann. Befindet sich der Substituent am Aromaten, so kann sich der Substituent bevorzugt in ortho- oder para-Position, besonders bevorzugt in para-Position zur Vinylgruppe befinden.

Als vinylaromatische Verbindungen kommen insbesondere Vinyltoluol, Vinylnaphthalin, $\alpha$- und p-Methylstyrol, $\alpha$-Butylstyrol, 4-n-Butylstyrol, 4-n-Decylstyrol und/oder Styrol in Betracht, wobei jedoch Styrol und/oder $\alpha$-Methylstyrol besonders bevorzugt sind.

Die Monomeren A3 umfassen aber auch ethylenisch ungesättigte Nitrile mit bis zu 20 C-Atomen, wie insbesondere Fumarsäuredinitril, Acrylnitril und Methacrylnitril, bevorzugt Acrylnitril und Methacrylnitril und besonders bevorzugt Acrylnitril, Vinylester von bis zu 20 C-Atome enthaltenden Carbonsäuren, wie insbesondere Vinyllaurat, Vinylstearat, Vinylpropionat, Versaticsäurevinylester, Vinylbutyrat und Vinylacetat, bevorzugt jedoch Vinylacetat, Vinyl- und Vinylidenhalogenide mit bis zu 10 C-Atomen, wie insbesondere mit Chlor, Fluor oder Brom substituierte ethylenisch ungesättigte Verbindungen, bevorzugt Vinylchlorid und Vinylidenchlorid und Vinylether von 1 bis 10 C-Atome enthaltenden Alkoholen, wie vorteilhaft Methylvinylether, Ethylvinylether, n-Propylvinylether, iso-Propylvinylether, n-Butylvinylether, sek-Butylvinylether, iso-Butylvinylether, tert-Butylvinylether und n-Octylvinylether, wobei Vinylether von 1 bis 4 C-Atome enthaltenden Alkoholen bevorzugt sind.

Mit besonderem Vorteil ist das wenigstens eine Monomere A3 zu $\geq$ 80 Gew.-% ausgewählt aus der Gruppe umfassend n-Butylacrylat, n-Butylmethacrylat, 2-Ethylhexylacrylat, Styrol und Methylmethacrylat.

In untergeordnetem Maße, d.h. $>$ 0 und $\leq$ 20 Gew.-%, vorteilhaft $\geq$ 1 und $\leq$ 10 Gew.-% und insbesondere vorteilhaft $\geq$ 1 und $\leq$ 6 Gew.-%, jeweils bezogen auf die Gesamtmenge an Monomeren A3, können die Monomeren A3 auch die nachfolgenden, funktionalisierten ethylenisch ungesättigten Monomere umfassen.

Als funktionalisierte ethylenisch ungesättigte Monomere kommen alle monoethylenisch ungesättigten Verbindungen mit wenigstens einer Hydroxygruppe, wie insbesondere alle Hydroxyalkyl-, vorteilhaft Hydroxy-$C_2$-$C_{10}$-alkyl-, bevorzugt Hydroxy-$C_2$-$C_4$-alkyl- und besonders vorteilhaft Hydroxy-$C_2$-$C_3$-alkylacrylate und/oder -methacrylate in Betracht, wobei im Rahmen dieser Schrift auch die alkoxylierten, d.h. die mit Alkylenoxiden (im wesentlichen Ethylenoxid und Propylenoxid) umgesetzten Hydroxyalkylacrylate und/oder -methacrylate als Monomere A3 angesehen werden sollen. Mit Vorteil ist das hydroxyalkylgruppenhaltige Monomere A3 ausgewählt aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxy-propylmethacrylat und 2-Hydroxyethylmethacrylat. Insbesondere vorteilhaft wird 2-Hydroxyethylacrylat und/oder 2-Hydroxyethylmethacrylat eingesetzt, wobei 2-Hydroxyethylmethacrylat besonders bevorzugt ist.

Dabei sollen die funktionalisierten ethylenisch ungesättigten Monomere auch solche Hydroxyalkylacrylate und -methacrylate umfassen, die mehr als eine Hydroxygruppe aufweisen, beispielsweise zwei bis fünf, bevorzugt zwei bis vier, besonders bevorzugt zwei bis drei Hydroxygruppen. Beispiele dafür sind Glycerinmonoacrylat und -methacrylat, Trimethylolpropanmonoacrylat und -methacrylat, Pentaerythritmonoacrylat und -methacrylat sowie Monoacrylate und -methacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit und Isomalt.

Zu den erfindungsgemäß einsetzbaren funtkionalisierten ethylenisch ungesättigten Verbindungen A3 zählen auch organische Verbindungen, welche wenigstens zwei nicht konjugierte ethylenisch ungesättigte Gruppen aufweisen, wie beispielsweise, 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropant-ri(meth)acrylat, Trimethylolethantri(meth)acrylat, Pentaerythritoltri- und -tetra(meth)acrylat, Allylmethacrylat, 1,2-, 1,3- und 1,4-Divinylbenzol sowie Mischungen davon. Besonders bevorzugt sind diese Verbindungen ausgewählt aus der Gruppe bestehend aus Divinylbenzol, 1,4-Butandioldiacrylat und Allylmethacrylat.

Weitere erfindungsgemäß einsetzbare funtkionalisierte ethylenisch ungesättigte Verbindungen A3 sind ausgewählt aus der Gruppe bestehend aus (Meth)acrylsäure-2-(2-oxo-imidazolidin-1-yl)-ethylester (2-Ureidoethylacrylat und 2-Ureidoethyl(meth)acrylat), N-[2-(2-oxo-oxazolidin-3-yl)-ethyl]-methacrylat, 2-(Acetoacetoxy)ethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid. Bevorzugt in dieser Gruppe sind (Meth)acrylsäure-2-(2-oxo-imidazolidin-1-yl)-ethylester, (Acetoacetoxy)ethylmethacrylat, Diacetonacrylamid und/oder Diacetonmethacrylamid, besonders bevorzugt sind (Meth)acrylsäure-2-(2-oxo-imidazolidin-1-yl)-ethylester und (Acetoacetoxy)ethylmethacrylat.

Zu den erfindungsgemäß einsetzbaren funtkionalisierten ethylenisch ungesättigten Verbindungen A3 zählen aber auch Verbindungen mit einer (Meth)acrylat- und einer Epoxygruppe. Insbesondere zu erwähnen sind Glycidylacrylat und Glycidylmethacrylat, bevorzugt Glycidylmethacrylat.

Ebenfalls zu den erfindungsgemäß einsetzbaren funtkionalisierten ethylenisch ungesättigten Verbindungen A3 zählen auch ethylenisch ungesättigte Verbindungen mit wenigstens einer siliziumhaltigen Gruppe, wie beispielsweise Vinyltriacetoxysilan, 3-(Methacryloyloxy)propyltrimethoxysilan oder Vinyltriethoxysilan.

Mit besonderem Vorteil ist das wenigstens eine Monomere A3 zu > 0 und ≤ 20 Gew.-% ausgewählt ist aus der Gruppe umfassend 2-Hydroxyethylacrylat, 2-Hydroxyethylmethacrylat, 2-(Acetoacetoxy)ethylmethacrylat, 2-Ureidoethylmethacrylat, Diacetonacrylamid, Glycidylmethacrylat, 3-(Methacryloyloxy)propyltrimethoxysilan, Vinyltriethoxysilan, Allylmethacrylat und 1,4-Butandioldiacrylat.

Die Gesamtmenge an Monomeren A3 beträgt ≥ 91,0 und ≤ 97,5 Gew.-%, vorteilhaft ≥ 93,0 und ≤ 97,5 Gew.-% und insbesondere vorteilhaft ≥ 95,2 und ≤ 97,4 Gew.-%, jeweils bezogen auf die Gesamtmonomerenmenge 1.

Erfindungsgemäß werden die Art und die Mengen der Monomeren A1 bis A3 so gewählt, dass das daraus nach der Polymerisation erhaltene Polymer 1 ein Glasübergangstemperatur $Tg^1$ gemessen nach DIN EN ISO 11357-2 (2013-09) [Differentialthermoanalyse, midpoint temperature, Aufheizrate 20 K/min] im Bereich ≥ -10 und ≤ 15 °C, vorteilhaft ≥ -5 und ≤ 10 °C und insbesondere vorteilhaft ≥ -5 und ≤ 5 °C aufweist. Von Bedeutung ist, dass alle in dieser Schrift angegebenen Glasübergangstemperaturen nach vorgenannter Methode bestimmt werden.

Dabei ist dem Fachmann geläufig, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten unter Verwendung folgender Formel

$$1/Tg = x_1/Tg^1 + x_2/Tg^2 + .... x_n/Tg^n,$$

in guter Annäherung abgeschätzt werden kann, wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Mit Vorteil werden in der ersten Polymerisationsstufe

| | |
|---|---|
| ≥ 1,0 und ≤ 3,0 Gew.-% | Acrylsäure, Methacrylsäure, Itaconsäure, Fumarsäure, Maleinsäure und/oder Crotonsäure, |
| ≥ 1,5 und ≤ 6,0 Gew.-% | $H_2C=C(CH_3)-C(=O)-[OCH(CH_3)CH_2]_{4-7}-O-P(=O)(-OH)_2$, $H_2C=C(CH_3)-C(=O)-[OCH_2CH_2]_{4-7}-O-P(=O)(-OH)_2$ und/oder $H_2C=C(CH_3)-C(=O)-OCH_2CH_2-O-P(=O)(-OH)_2$, |
| ≥ 81 und ≤ 97,5 Gew.-% | n-Butylacrylat, n-Butylmethacrylat, 2-Ethylhexylacrylat, Styrol und/oder Methylmethacrylat, und |
| ≥ 0 und ≤ 10 Gew.-% | 2-Hydroxyethylacrylat, 2-Hydroxyethylmethacrylat, 2-(Acetoacetoxy)ethylmethacrylat, 2-Ureidoethylmethacrylat, Diacetonacrylamid, Glycidylmethacrylat, 3-(Methacryloyloxy)propyltrimethoxysilan, Vinyltriethoxysilan, Allylmethacrylat und/oder 1,4-Butandioldiacrylat, |

und besonders bevorzugt

| | |
|---|---|
| ≥ 1,0 und ≤ 2,0 Gew.-% | Acrylsäure und/oder Methacrylsäure, |
| ≥ 1,5 und ≤ 5,0 Gew.-% | $H_2C=C(CH_3)-C(=O)-[OCH(CH_3CH_2)]_{4-7}-O-P(=O)(-OH)_2$ |
| ≥ 85 und ≤ 97,5 Gew.-% | Methylmethacrylat, Styrol und/oder 2-Ethylhexylacrylat, und |

(fortgesetzt)

| | |
|---|---|
| ≥ 0 und ≤ 8,0 Gew.-% | (Acetoacetoxy)ethylmethacrylat und/oder Vinyltriethoxysilan, |

eingesetzt.

Als Monomere B1 kommen alle vorgenannten Monomere A1 in Betracht. Dabei betragen die Mengen an Monomeren B1 ≤ 0,1 Gew.-%, vorteilhaft ≤ 0,05 Gew.-% und insbesondere vorteilhaft ≤ 0,01 Gew.-%, jeweils bezogen auf die Gesamtmonomerenmenge 2.

In analoger Weise kommen als Monomere B2 alle vorgenannten Monomere A2 in Betracht. Dabei betragen die Mengen an Monomeren B2 ≤ 0,1 Gew.-%, vorteilhaft ≤ 0,05 Gew.-% und insbesondere vorteilhaft ≤ 0,01 Gew.-%, jeweils bezogen auf die Gesamtmonomerenmenge 2.

Mit Vorteil werden jedoch keinerlei Monomere B1 und B2 eingesetzt.

Als Monomere B3 kommen prinzipiell alle vorgenannten Monomeren A3 in Betracht, wobei jedoch der Anteil an den funktionalisierten ethylenisch ungesättigten Monomeren ≤ 1,0 Gew.-%, vorteilhaft ≤ 0,5 Gew.-% und insbesondere vorteilhaft ≤ 0,1 Gew.-%, jeweils bezogen auf die Gesamtmenge an Monomeren B3 beträgt. Mit besonderem Vorteil werden als Monomeren B3 n-Butylacrylat, n-Butylmethacrylat, 2-Ethylhexylacrylat, Styrol und Methylmethacrylat eingesetzt, deren Anteil ≥ 99,0 Gew.-%, bevorzugt ≥ 99,5 Gew.-% und besonders bevorzugt ≥ 99,9 Gew.-%, jeweils bezogen auf die Gesamtmenge an Monomeren B3 beträgt. Mit besonderem Vorteil sind die Monomeren B3 zu 100 Gew.-% ausgewählt aus der Gruppe umfassend n-Butylacrylat, n-Butylmethacrylat, 2-Ethylhexylacrylat, Styrol und Methylmethacrylat.

Erfindungsgemäß werden die Art und die Mengen der Monomeren B1 bis B3 so gewählt, dass das daraus nach der Polymerisation erhaltene Polymer 2 eine Glasübergangstemperatur $Tg^2$ aufweist, welche wenigstens 10 °C über der Glasübergangstemperatur $Tg^1$ liegt [$Tg^2 = Tg^1 + \geq 10$ °C]. Mit Vorteil liegt die Glasübergangstemperatur $Tg^2$ wenigstens 15 °C über der Glasübergangstemperatur $Tg^1$. Die Glasübergangstemperatur $Tg^2$ liegt daher im Bereich ≥ 0 und ≤ 80 °C, vorteilhaft ≥ 10 und ≤ 60 °C und insbesondere vorteilhaft ≥ 10 und ≤ 40 °C.

Mit Vorteil werden in der zweiten Polymerisationsstufe

| | |
|---|---|
| ≥ 0 und ≤ 95 Gew.-% | n-Butylmethacrylat, |
| ≥ 2 und ≤ 90 Gew.-% | Styrol, und |
| ≥ 0 und ≤ 40 Gew.-% | Methylmethacrylat und/oder 2-Ethylhexylacrylat, |

und besonders bevorzugt

| | |
|---|---|
| ≥ 5 und ≤ 95 Gew.-% | n-Butylmethacrylat, |
| ≥ 2 und ≤ 70 Gew.-% | Styrol, und |
| ≥ 0 und ≤ 25 Gew.-% | Methylmethacrylat und/oder 2-Ethylhexylacrylat |

eingesetzt.

Mit Vorteil werden die Art und Mengen der Monomeren A1 bis A3 sowie B1 bis B3 so gewählt, dass das erhaltene Polymer 1 eine Glasübergangstemperatur $Tg^1$ im Bereich ≥ -5 und ≤ 10 °C und das erhaltene Polymer 2 eine Glasübergangstemperatur $Tg^2$ im Bereich ≥ 10 und ≤ 40 °C aufweist.

Wesentlich ist, dass das Mengenverhältnis von Gesamtmonomerenmenge 1 zu Gesamtmonomerenmenge 2 70 bis 85 Gew.-% zu 15 bis 30 Gew.-% und vorteilhaft 70 bis 80 Gew.-% zu 20 bis 30 Gew.-% beträgt.

Erfindungsgemäß von Bedeutung ist es, dass die vorgenannten Monomeren A1 bis A3 sowie, B1 bis B3 einzeln oder auch als Gemische eingesetzt werden können. Von den Monomeren A1 bis A3 können jeweils die Gesamt- bzw. Teilmengen im wässrigen Polymerisationsmedium vor Initiierung der Polymerisationsreaktion vorgelegt und die gegebenenfalls verbliebenen Teilmengen unter Polymerisationsbedingungen zudosiert werden. Es ist jedoch auch möglich, die Gesamtmengen der Monomeren A1 bis A3 (Gesamtmonomerenmenge 1) dem wässrigen Polymerisationsmedium unter Polymerisationsbedingungen zuzudosieren.

In einer bevorzugten Ausführungsform wird in der ersten Polymerisationsstufe wenigstens eine Teilmenge ≤ 10 Gew.-% der Gesamtmonomerenmenge 1 im wässrigen Polymerisationsmedium vor Initiierung der Polymerisationsreaktion vorgelegt und die verbliebene Restmenge dem wässrigen Polymerisationsmedium unter Polymerisationsbedingungen zudosiert, während in der zweiten Polymerisationsstufe die Gesamtmenge der Monomeren B1 bis B3 (Gesamtmonomerenmenge 1) dem wässrigen Polymerisationsmedium unter Polymerisationsbedingungen zudosiert werden. Dabei können die Monomeren A1 bis A3 sowie B1 bis B3 dem wässrigen Polymerisationsmedium jeweils in Einzelströmen, als Monomerengemisch oder in Form einer wässrigen Monomerenemulsion diskontinuierlich, sowie kontinuierlich mit gleichbleibenden oder sich ändernden Mengenströmen zudosiert werden.

Mit besonderem Vorteil werden die Monomeren der ersten und der zweiten Polymerisationsstufe jedoch jeweils als Monomerengemische, insbesondere vorteilhaft als wässrige Monomerenemulsionen eingesetzt. Vorteilhaft werden wenigstens ≥ 90 Gew.-% und insbesondere vorteilhaft ≥ 95 Gew.-% bzw. die Gesamtmengen der Monomerengemische der ersten und der zweiten Polymerisationsstufe dem wässrigen Polymeriationsmedium als wässrige Monomerenemulsionen unter Polymerisationsbedingungen zudosiert.

Die erfindungsgemäße radikalisch initiierte wässrige Emulsionspolymerisation wird in der Regel in Gegenwart eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation zu initiieren. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden und insbesondere vorteilhaft < 1 Stunde aufweist und dabei immer genügend Startradikale zur Verfügung stehen, um die Polymerisationsreaktion zu initiieren und aufrechtzuerhalten.

Als Reaktionstemperatur für die radikalisch initiierte wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 60 bis 100 °C angewendet. Die radikalisch initiierte wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A1 bis B3 mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm unter Sauerstoffausschluss, insbesondere unter Inertgasatmosphäre, wie beispielsweise unter Stickstoff oder Argon durchgeführt.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Maßgabe des Verbrauchs kontinuierlich oder diskontinuierlich zuzugeben. Selbstverständlich können in der ersten und in der zweiten Polymerisationsstufe unterschiedliche Radikalinitiatoren in unterschiedlichen Mengen eingesetzt werden. In einer bevorzugten Ausführungsform wird eine Teilmenge des Radikalinitiators im wässrigen Reaktionsmedium vor Initiierung

der Polymerisationsreaktion vorgelegt und die verbleibende Restmenge parallel zu der Monomerendosierung während der ersten und der zweiten Polymerisationsstufe zudosiert.

In der Regel beträgt die Gesamtmenge an Radikalinitiatoren $\geq$ 0,05 und $\leq$ 5 Gew.-%, bevorzugt $\geq$ 0,1 und $\leq$ 3 Gew.-% und besonders bevorzugt $\geq$ 0,1 und $\leq$ 1,5 Gew.-%, jeweils bezogen auf die Gesamtmonomerenmenge.

Zur Einstellung der gewichtsmittleren Molekulargewichte der in der ersten und in der zweiten Polymerisationsstufe gebildeten Polymeren können radikalkettenübertragende Verbindungen (Radikalkettenregler) eingesetzt werden. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkansäure und deren Derivate, wie 3-Mercaptopropionsäure-6-methylheptylester oder 2-Mercaptoethansäure-2-ethylhexylester sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter Radikalkettenregler einzusetzen.

Erfindungsgemäß kann die Gesamtmenge des Radikalkettenreglers im wässrigen Reaktionsmedium vor Initiierung der Polymerisationsreaktion vorgelegt werden. Es ist aber auch möglich, gegebenenfalls lediglich eine Teilmenge des Radikalkettenreglers im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Bedarf kontinuierlich oder diskontinuierlich zuzugeben. Selbstverständlich können in der ersten und in der zweiten Polymerisationsstufe unterschiedliche Radikalkettenregler in unterschiedlichen Mengen eingesetzt werden.

In der Regel beträgt die Gesamtmenge an Radikalkettenregler $\geq$ 0 und $\leq$ 5 Gew.-%, bevorzugt $\geq$ 0 und $\leq$ 2 Gew.-% und besonders bevorzugt $\geq$ 0 und $\leq$ 1 Gew.-%, jeweils bezogen auf die Gesamtmonomerenmenge.

Erfindungswesentlich erfolgt die Durchführung der wässrigen Emulsionspolymerisation in Gegenwart wenigstens eines phosphorgruppenhaltigen Dispergierhilfsmittels, welches sowohl die Monomerentröpfchen als auch gebildeten Polymerteilchen in der wässrigen Phase dispers verteilt hält und so die Stabilität der erzeugten wässrigen Polymerdispersion gewährleistet. Als phosphorgruppenhaltige Dispergierhilfsmittel sind prinzipiell alle Dispergierhilfsmittel geeignet, welche wenigstens eine phosphorhaltige Gruppe enthalten.

Als phoshorgruppenhaltige Dispergierhilfsmittel geeignet sind beispielsweise Mono- und/oder Diester der Phosphorsäure mit alkoxylierten und/oder nichtalkoxylierten $C_6$- bis $C_{30}$-Fettalkoholen wie sie beispielsweise in der WO 2009/17757, Abschnitte [0006], [0007] sowie [0034] bis [0065] oder in der WO 2009/115607, Seite 4, Zeilen 22 bis 34 sowie Seite 25, Zeile 31 bis Seite 26, Zeile 14 offenbart sind. Von Bedeutung ist, dass im Rahmen dieser Schrift auf diese Literaturstellen ausdrücklich Bezug genommen werden soll und daher die dort offenbarten phosphorgruppenhaltigen Dispergierhilfsmittel als Bestandteil dieser Schrift angesehen werden sollen.

Mit besonderem Vorteil werden im Rahmen dieser Schrift jedoch solche phosphorgruppenhaltige Dispergierhilfsmittel eingesetzt, die ausgewählt sind unter Verbindungen der Formel II

$$R^1\text{-O-(AO)}_m\text{-P(=O)(OR}^2\text{)(OH)} \qquad \text{Formel (II)}$$

worin

- m für eine ganze Zahl von 0 bis 30, bevorzugt 5 bis 25 und insbesondere bevorzugt 5 bis 20 steht,
- AO für Alkylenoxy steht, wie unter den Verbindungen der allgemeinen Formel I definiert,
- $R^1$ für $C_6$-$C_{30}$-Alkyl, bevorzugt $C_8$-$C_{22}$-Alkyl und insbesondere bevorzugt $C_{11}$-$C_{14}$-Alkyl steht und
- $R^2$ für H oder eine Gruppe -$(AO)_m$-$R^{2a}$ steht, worin $R^{2a}$ die für $R^1$ gegebene Bedeutung aufweist und AO und m eine der zuvor gegebenen Bedeutungen aufweisen, wobei $R^2$ jedoch vorteilhaft für H steht,

und den Alkalimetall- oder Ammoniumsalzen der vorgenannten Verbindungen der Formel II;

Die vorgenannten phosphorgruppenhaltigen Dispergierhilfsmittel sind dem Fachmann geläufig und käuflich erwerbbar, beispielsweise unter

Maphos® 24 T (von BASF BTC),
Maphos® 10 T (von BASF BTC)
Amphisol® A (von DSM Nutritional Products Europe Ltd.)
Colafax® CPE (von Colonial Chemical, Inc.)
Crodafos® MCA (von Croda Inc.),
Crodafos® CES (von Croda Inc.),
Crodafos® HCE (von Croda Inc.),
Crodafos® 1435 (von Croda Inc.),
Crodafos® CS 20 Acid (von Croda Inc.),
Crodafos® CP (von Croda Inc.),
Hostaphat® CC100 (von Clariant International Ltd.),
Rhodafac® RS-410 (von Solvay S.A.)
Rhodafac® RS-610 (von Solvay S.A.)
Rhodafac® RS-610/A25 (von Solvay S.A.)
Rhodafac® RS-610 E (von Solvay S.A.)
Rhodafac® RS-710 (von Solvay S.A.)
Rhodafac® RS-710 E (von Solvay S.A.) oder
Lutensit® A-EP (von BASF SE)

Die erfindungsgemäß eingesetzte Menge des wenigstens einen phosphorgruppenhaltigen Dispergierhilfsmittels beträgt ≥ 0,5 Gew.-%, vorteilhaft ≥ 0,5 und ≤ 4,0 Gew.-%, bevorzugt ≥ 0,5 und ≤ 2,0 Gew.-% und besonders bevorzugt ≥ 0,7 und ≤ 1,5 Gew.-%, jeweils bezogen auf die Gesamtmonomerenmenge.

Erfindungsgemäß kann die Gesamtmenge des phosphorgruppenhaltigen Dispergierhilfsmittels im wässrigen Reaktionsmedium vor Initiierung der Polymerisationsreaktion vorgelegt werden. Es ist aber auch möglich, gegebenenfalls lediglich eine Teilmenge des phosphorgruppenhaltigen Dispergierhilfsmittels im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten bzw. in der ersten und der zweiten Polymerisationsstufe nach Bedarf kontinuierlich oder diskontinuierlich zuzugeben. Selbstverständlich können in der ersten und in der zweiten Polymerisationsstufe unterschiedliche phosphorgruppenhaltige Dispergierhilfsmittel in unterschiedlichen Mengen eingesetzt werden. Mit Vorteil werden ≥ 50 Gew.-% des wenigstens einen phosphorgruppenhaltigen Dispergierhilfsmittel als Bestandteil der wässrigen Monomerenemulsion dem wässrigen Reaktionsmedium während der Polymerisationsreaktion zudosiert. Wesentlich ist jedoch, dass wenigstens eine Teilmenge des wenigstens einen phosphorgruppenhaltigen Dispergierhilfsmittels bereits während der ersten Polymerisationsstufe anwesend ist. Mit Vorteil beträgt die Menge des wenigstens einen phosphorgruppenhaltigen Dispergierhilfsmittels zu jedem Zeitpunkt der wässrigen Emulsionspolymerisation ≥ 0,5 Gew.-% und vorteilhaft ≥ 0,8 Gew.-%, jeweils bezogen auf die zum betrachteten Zeitpunkt in das wässrige Polymerisationsgemisch zugegebene Gesamtmenge an Monomeren A1 bis B3.

Optional können neben dem wenigstens einen phosphorgruppenhaltigen Dispergierhilfsmittel noch weitere für die Durchführung von radikalischen wässrigen Emulsionspolymerisationen üblicherweise verwendete Schutzkolloide und/oder Emulgatoren eingesetzt werden.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als zusätzliche Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C4 bis C12), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxilierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel III

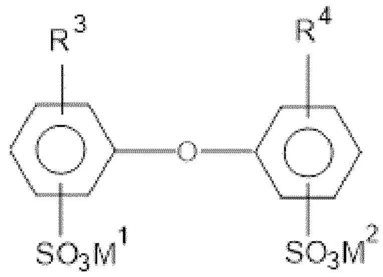

Formel (III)

worin $R^3$ und $R^4$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel III bedeuten $R^3$ und $R^4$ bevorzugt lineare oder verzweigte Alkylreste mit 6 bis 18 C-Atomen, insbesondere mit 6, 12 und 16 C-Atomen oder Wasserstoff, wobei $R^3$ und $R^4$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen der allgemeinen Formel III, in denen $M^1$ und $M^2$ Natrium, $R^3$ ein verzweigter Alkylrest mit 12 C-Atomen und $R^4$ ein H-Atom oder $R^3$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen der allgemeinen Formel III sind allgemein bekannt, z.B. aus US-A 4269749, und im Handel erhältlich.

Werden neben dem wenigstens einen phosphorgruppenhaltigen Dispergierhilfsmittel noch zusätzliche Dispergierhilfsmittel eingesetzt, so finden vorteilhaft anionische und/oder nichtionische und insbesondere vorteilhaft anionische Tenside Verwendung.

In der Regel beträgt die Gesamtmenge an optionalen Dispergierhilfsmitteln $\geq 0$ und $\leq 3,0$ Gew.-%, bevorzugt $\geq 0$ und $\leq 2,0$ Gew.-% und besonders bevorzugt $\geq 0,1$ und $\leq 0,5$ Gew.-%, jeweils bezogen auf die Gesamtmonomerenmenge.

Erfindungsgemäß wird unter Polymerisationsbedingungen während der radikalisch initiierten Emulsionspolymerisation die Gesamtmenge an optionalen Dispergierhilfsmittel in der ersten und/oder zweiten Polymerisationsstufe nach Bedarf kontinuierlich oder diskontinuierlich zugegeben. Es ist aber auch möglich, gegebenenfalls die Gesamtmenge oder eine Teilmenge des optional eingesetzten Dispergierhilfsmittels im wässrigen Reaktionsmedium vor Initiierung der Polymerisationsreaktion vorzulegen und die gegebenenfalls verbliebene Restmenge während der ersten und/oder der zweiten Polymerisationsstufe kontinuierlich oder diskontinuierlich zuzudosieren.

Wesentlich ist ferner, dass die radikalisch initiierte wässrige Emulsionspolymerisation in der ersten Polymerisationsstufe optional auch in Anwesenheit einer Polymersaat, beispielsweise in Anwesenheit von 0,01 bis 10 Gew.-%, häufig von 0,05 bis 7,0 Gew.-% und oft von 0,1 bis 4,0 Gew.-% einer Polymersaat, jeweils bezogen auf die Gesamtmonomerenmenge, durchgeführt werden kann.

Eine Polymersaat wird erfindungsgemäß insbesondere dann eingesetzt, wenn die Teilchengrö-βe der mittels einer radikalisch initiierten wässrigen Emulsionspolymerisation herzustellenden Polymerpartikel gezielt eingestellt werden soll (siehe hierzu beispielsweise US-A 2520959 und US-A 3397165).

Wird im erfindungsgemäßen Verfahren eine Polymersaat eingesetzt, so weisen deren Polymersaatpartikel vorteilhaft einen gewichtsmittleren Durchmesser Dw $\leq 100$ nm, häufig $\geq 5$ nm bis $\leq 50$ nm und oft $\geq 15$ nm bis $\leq 35$ nm auf.

Üblicherweise wird die Polymersaat in Form einer wässrigen Polymerisatdispersion eingesetzt.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymer 1, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymer 1 verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator

zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A1 bis A3 bzw. B1 bis B3 zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Mit Vorteil wird das erfindungsgemäße Verfahren derart durchgeführt, dass mit der zweiten Polymerisationsstufe erst dann begonnen wird, nachdem die Gesamtmonomerenmenge 1 zu ≥ 98 Gew.-%, vorteilhaft zu ≥ 99 Gew.-% und insbesondere vorteilhaft zu ≥ 99,5 Gew.-% umgesetzt ist, was leicht anhand dem Fachmann geläufiger kalorimetrischer Messungen bestimmt werden kann. In entsprechender Weise erfolgt auch die Polymerisationsstufe 2 bis zu einen Monomerenumsatz von ≥ 98 Gew.-%, vorteilhaft ≥ 99 Gew.-% und insbesondere vorteilhaft zu 99,5 Gew.-% der Gesamtmonomerenmenge 2.

Erfindungsgemäß vorteilhaft liegt der pH-Wert des wässrigen Polymerisationsgemisches sowohl während der ersten wie auch während der zweiten Polymerisationsstufe im Bereich ≥ 3 und ≤ 8 und insbesondere vorteilhaft im Bereich ≥ 4,0 und ≤ 6,5, gemessen bei Raumtemperatur. Erfindungsgemäß erfolgt die pH-Messung bzw. pH-Kontrolle derart, dass über eine kleine Bypassleitung eine kleine Menge des wässrigen Polymerisationsgemisches kontinuierlich aus dem Polymerisationsgefäß ausgeschleust und auf 20 bis 25 °C (Raumtemperatur) abgekühlt wird, von diesem mittels einer geeichten pH-Elektrode der pH-Wert bestimmt und danach das wässrige Polymerisationsgemisch wieder in das Polymerisationsgefäß zurückgeleitet wird. Selbstverständlich ist es auch möglich, eine kleine Probe des wässrigen Polymerisationsgemisches zu nehmen, diese auf Raumtemperatur abzukühlen, den pH-Wert zu messen und anschließend die Probe wieder dem wässrigen Polymerisationsgemisch zuzuführen.

Erfindungsgemäß können zur pH-Werteinstellung alle üblichen Basen eingesetzt werden, wie Alkali-, Erdalkali- oder Ammoniumhydroxide bzw. -carbonate oder -hydrogencarbonate, wie beispielsweise NaOH, KOH, $NH_4OH$, $Ca(OH)_2$, $Na_2CO_3$, $K_2CO_3$, $(NH_4)CO_3$, $NaHCO_3$, $KHCO_3$ oder $NH_4HCO_3$. Als Basen ebenfalls geeignet sind Ammoniak sowie primäre, sekundäre oder tertiäre organische Amine, wie beispielsweise Methylamin, Ethylamin, Propylamin-1, Propylamin-2, n-Butylamin-1, n-Butylamin-2, 2-Methylpropylamin-1, 2-Methylpropylamin-2 etc., Dimethylamin, Diethylamin, Di-n-propylamin, Di-iso-propylamin, Di-n-butylamin, Di-2-methylpropylamin etc., Trimethylamin, Triethylamin, Tri-n-propylamin, Tri-iso-propylamin, Tri-n-butylamin, Tri-2-methylpropylamin etc., aber auch gemischte Amine, wie N-Methyl-N-ethylamin, N,N-Dimethyl-N-ethylamin etc. Mit Vorteil werden jedoch zur pH-Werteinstellung solche Basen eingesetzt, welche einen Siedepunkt von ≤ 20 °C, vorteilhaft ≤ 10 °C und insbesondere vorteilhaft ≤ 0 °C bei einem Druck von 1,013 bar (absolut) aufweisen, wie insbesondere Trimethylamin sowie Ammoniak, insbesondere in Form seiner wässrigen Lösung oder seiner basischen Salze $(NH_4)_2CO_3$, $NH_4HCO_3$, wobei jedoch Ammoniak, insbesondere in Form seiner wässrigen Lösung besonders bevorzugt ist.

Die nach der zweiten Polymerisationsstufe erhaltene wässrige Polymerdispersion enthält Polymerteilchen, deren gewichtsmittlerer Teilchendurchmesser im Bereich ≥ 50 und ≤ 500 nm, vorteilhaft im Bereich ≥ 50 und ≤ 200 nm und insbesondere im Bereich ≥ 80 und ≤ 150 nm, liegen. Die Bestimmung der gewichtsmittleren Teilchendurchmesser erfolgt erfindungsgemäß generell nach ISO 13321 mit einem High Performance Particle Sizer der Fa. Malvern bei 22 °C und einer Wellenlänge von 633 nm.

Selbstverständlich sind in einer bevorzugten Ausführungsform auch die nach dem erfindungsgemäßen Verfahren zugänglichen wässrigen Polymerdispersionen sowie durch deren Trockung zugänglichen Polymerpulver umfasst. Die Herstellung von Polymerpulver durch Trocknung von wässrigen Polymerdispersionen ist dem Fachmann geläufig und erfolgt beispielsweise durch Gefriertrocknung oder Sprühtrocknung.

Von Bedeutung ist, dass sich die nach dem erfindungsgemäßen Verfahren hergestellten wässrigen Polymerdispersionen durch eine hohe Stabilität und durch eine geringe Koagulatbildung auszeichnen. Auch weisen die für das erfindungsgemäße Verfahren verwendeten V2A- bzw. V4A-Stahlreaktoren insbesondere durch die pH-Wertkontrolle keine bzw. eine deutlich geringere Korrosionserscheinungen auf.

Von Bedeutung ist ferner, dass sich die nach dem erfindungsgemäßen Verfahren zugänglichen wässrigen Polymerdispersionen sowie die daraus durch Trocknung erhältlichen Polymerpulver vorteilhaft als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen verwenden lassen.

Die erfindungsgemäßen wässrigen Polymerdispersionen bzw. deren Polymerpulver eignen sich insbesondere vorteilhaft als Bindemittel in wässrigen Korrosionsschutzformulierungen für Metalloberflächen, wobei hierunter auch die

Oberflächen von Metalllegierungen verstanden werden sollen. Werden Mehrschichtsysteme eingesetzt, so können die erfindungsgemäßen wässrigen Polymerdispersionen bzw. deren Polymerpulver in einer oder mehreren Schichten als Bindemittel eingesetzt werden.

Werden die vorgenannten wässrigen Formulierungen zur Herstellung von wässrigen Korrosionsschutzformulierungen eingesetzt, so können diese wässrigen Formulierungen neben üblichen Bestandteilen, wie organische Lösemittel, Koaleszenzmittel, zusätzliche Additive wie Dispergierhilfsmittel, Neutralisationsmittel, Entschäumer, Verdicker und Verlaufsmittel sowie bakterizide oder fungizide Hilfsstoffe noch zusätzlich Pigmente, Füllstoffe und/oder Korrosionsschutzmittel enthalten.

Dabei können als Pigmente prinzipiell alle dem Fachmann geläufigen organischen und/oder anorganischen Weiß- bzw. Buntpigmente mit einer Teilchengröße $\leq 15\ \mu m$, gemessen nach ISO 1524 mit einem Hegmann-Grindometer, eingesetzt werden.

Als wichtigstes Weißpigment ist aufgrund seines hohen Brechungsindex (Rutil: 2,70 und Anatas: 2,55) und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden.

Selbstverständlich können die wässrigen Formulierungen zusätzlich zu den Pigmenten noch sogenannte, dem Fachmann geläufige Füllstoffe enthalten. Als Füllstoffe werden im Wesentlichen pulverförmige anorganische Materialien mit einer Teilchengröße $\leq 20\ \mu m$ (nach Hegmann) mit im Vergleich zu den Pigmenten geringerem Brechungsindex verstanden (weiße Füllstoffe weisen nach DIN 55943 und DIN 55945 Brechungsindexwerte < 1,7 auf). Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Als Korrosionsschutzmittel, kommen erfindungsgemäß insbesondere Korrosionsinhibitoren oder Korrosionsschutzpigmente in Betracht.

Beispiele für Korrosionsinhibitoren sind aufgeführt in "Corrosion Inhibitors.2nd Edition. An industrial Guide", Ernest W. Flick, Ed: William Andrew Inc ISBN: 978-0-8155-1330-8. Bevorzugte Korrosionsinhibitoren sind Hexamin, Benzotriazol, Phenylenediamin, Dimethylethanolamin, Polyanilin, Natriumnitrit, Zimtaldehyd, Kondensationsprodukte von Aldehyden und Aminen (Imine), Chromate, Nitrite, Phosphate, Hydrazin und Ascorbinsäure.

Beispiele für Korrosionsschutzpigmente sind modifizierte Zink-Orthophosphate (beispielsweise HEUCOPHOS® ZPA, ZPO and ZMP), Polyphosphate (beispielsweise HEUCOPHOS® ZAPP, SAPP, SRPP and CAPP), WSA - Wide Spectrum Anticorrosives (beispielsweise HEUCOPHOS® ZAMPLUS and ZCPPLUS) und modifizierte Silikat-Pigmente (beispielsweise HEU-COSIL® CTF, Halox® 750), beispielsweise der Firma Heubach GmbH, sowie Bariumborphosphat (beispielsweise Halox® 400), Bariumphosphosilikate (beispielsweise Halox® BW-111, Halox® BW-191), Calciumborosilikate (beispielsweise Halox® CW-291, CW-22/221, CW-2230), Calciumphosphosilikat (beispielsweise Halox® CW-491), Strontiumphosphosilikat (beispielsweise Halox® SW-111) oder Strontiumzinkphoshosilikat (beispielsweise Halox® SZP-391) der Firma Halox®.

In einer Ausführungsform sind daher auch wässrige Korrosionsschutzformulierungen umfasst, welche wenigstens eine erfindungsgemäße wässrige Polymerdispersion oder wenigstens ein erfindungsgemäßes Polymerpulver enthalten.

Erfindungsgemäß ebenfalls umfasst ist ein Verfahren zum Beschichten von Metalloberflächen, welches dadurch gekennzeichnet ist, dass auf eine Metalloberfläche eine wässrige Korrosionsschutzformulierung enthaltend eine erfindungsgemäße wässrige Polymerdispersion oder ein erfindungsgemäßes Polymerpulver aufgebracht und anschließend getrocknet wird.

Das Aufbringen der wässrigen Korrosionsschutzformulierung auf eine Metalloberfläche kann in bekannter Weise, z. B. durch Spritzen, Spachteln, Rakeln, Bürsten, Rollen, Walzen oder Gießen erfolgen. Anschließend werden die flüchtigen Bestandteile der wässrigen Formulierung durch Trocknung entfernt. Dieser Vorgang kann - falls gewünscht - ein- oder mehrfach wiederholt werden. Dabei wird die Auftragsmenge in der Regel so gewählt, dass die Trockenfilmschichtdicke (nach Entfernung der flüchtigen Bestandteile) 15 bis 150 $\mu m$ und vorteilhaft 30 bis 100 $\mu m$ beträgt.

Mit den wässrigen Formulierungen werden zum Korrosionsschutz als Substrate die Oberflächen von Eisen, Stahl, Zn, Zn-Legierungen, Al oder Al-Legierungen behandelt. Dabei können die metallischen, vorteilhaft fettfreien Oberflächen unbeschichtet sein, mit Zink, Aluminium oder deren Legierungen überzogen sein, feuerverzinkt, galvanisch verzinkt, sherardisiert oder mit Primern vorbeschichtet sein.

Insbesondere handelt es sich um die Oberflächen von Eisen, Stahl, Zink, Zinklegierungen, Aluminium oder Aluminiumlegierungen. Stahl kann die üblichen, dem Fachmann bekannten Legierungskomponenten enthalten. Es kann sich dabei um die Oberflächen von vollständig aus den besagten Metallen bzw. Legierungen bestehenden Körpern handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen kann. In einer bevorzugten Ausführungsform der Erfindung handelt es sich um Stahloberflächen oder verzinkte und/oder aluminierte Stahloberflächen.

Zink- oder Aluminiumlegierungen sind dem Fachmann bekannt. Typische Bestandteile von Zinklegierungen umfassen insbesondere Al, Pb, Si, Mg, Sn, Cu oder Cd. Typische Bestandteile von Aluminium-Legierungen umfassen insbesondere Mg, Mn, Si, Zn, Cr, Zr, Cu oder Ti. Der Begriff "Zinklegierung" soll auch Al/Zn-Legierungen einschließen, bei denen Al- und Zn in annähernd gleicher Menge vorhanden sind. Je nach dem gewünschten Anwendungszweck wählt der Fachmann Art und Menge von Legierungsbestandteilen aus. Zn- oder Aluminiumbeschichtungen können auf Stahl beispielsweise durch Schmelztauchverfahren, z.B. Feuerverzinken, oder durch Sherardisieren aufgebracht werden. Sofern das Bauteil immobil ist oder die Bauteilgeometrie es nicht zulässt, können entsprechende Schichten auch mittels thermischem Spritzen (Spritzverzinken, Spritzaluminieren) aufgebracht werden.

Mittels den erfindungsgemäßen wässrigen Polymerdispersionen, insbesondere der erfindungsgemäßen wässrigen Formulierungen können vorteilhaft metallische Oberflächen vor Korrosion geschützt werden, die während des Gebrauchs in Kontakt mit atmosphärischer Luft stehen, es kann sich aber auch um Oberflächen handeln, die während des Gebrauchs in Kontakt mit Wasser, Erdreich oder anderen korrosiven Medien stehen.

Bei den metallischen Oberflächen, die mittels der erfindungsgemäßen wässrigen Polymerdispersionen, insbesondere der erfindungsgemäßen wässrigen Formulierungen vor Korrosion geschützt werden sollen, kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Bei einer Ausführungsform der Erfindung kann es sich bei den beschichteten Gegenständen um immobile metallische Konstruktionen wie beispielsweise Gebäude, Brücken, Strommasten, Tanks, Container, Gebäude, Pipelines, Kraftwerke, chemische Anlagen, Schiffe, Kräne, Pfähle, Spundwände, Armaturen, Rohre, Tanks, Fittings, Flansche, Kupplungen, Hallen, Dächer und Baustahl handeln. Bei dieser Ausführungsform werden Korrosionsschutzbeschichtungen üblicherweise an Ort und Stelle aufgestrichen oder aufgespritzt. Dabei kann es sich sowohl um einen Erstsschutz oder um eine Instandsetzung handeln. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit. Die relative Luftfeuchtigkeit kann beliebig sein, bevorzugt beträgt sie zwischen 10 und 80 % und besonders bevorzugt zwischen 30 und 70 %. Je nach dem erforderlichen Schutzgrad wird der Korrosionsschutz von Oberflächen durch Korrosionsschutzanstriche auch als leichter, mittlerer und schwerer Korrosionsschutz bezeichnet.

Die Erfindung soll anhand folgender nicht einschränkender Beispiele erläutert werden.

## Beispiele

### Beispiel 1 (Dispersion 1)

In einem mit Dosiereinrichtungen und Temperaturreglung ausgerüstetem 2 l-Polymerisationsgefäß wurden bei 20 bis 25 °C (Raumtemperatur) unter Stickstoffatmosphäre

| | |
|---|---|
| 260,0 g | entionisiertes Wasser, und |
| 12,0 g | einer 25 gew.-%igen wässrigen Lösung eines phosphorgruppenhaltigen Dispergierhilfsmittels (Rhodafac® RS610/A25) |

vorgelegt und unter Rühren auf 90 °C aufgeheizt. Bei Erreichung dieser Temperatur wurde 30,4 g von Zulauf 1 zugegeben, daran anschließend 33,8 g einer 2,5 gew.-%igen wässrigen Lösung von Ammoniumperoxodisulfat innerhalb von 2 Minuten zudosiert und danach bei vorgenannter Temperatur noch 10 Minuten nachgerührt. Zeitgleich beginnend mit der Dosierung der Ammoniumperoxodisulfat-Lösung wurden 32,6 g einer 5,3 gew.-%igen wässrigen Lösung von Ammoniak über einen Zeitraum von 175 Minuten mit gleichbleibendem Mengenstrom kontinuierlich zudosiert.

Nach Ablauf der zehnminütigen Nachrührzeit wurde unter Aufrechterhaltung einer Temperatur von 90 °C der Rest von Zulauf 1 innerhalb von 90 Minuten bei gleichbleibendem Mengenstrom kontinuierlich zudosiert. Zeitgleich

beginnend mit dem Restzulauf von Zulauf 1 wurden 48,4 g einer 2,5 gew.-%igen wässrigen Lösung von Ammoniumperoxodisulfat ebenfalls innerhalb von 90 Minuten kontinuierlich zudosiert. Danach ließ man das Polymerisationsgemisch noch 15 Minuten bei 90 °C nachreagieren. Danach wurde unter Aufrechterhaltung einer Temperatur von 90 °C innerhalb von 65 Minuten bei gleichbleibendem Mengenstrom Zulauf 2 kontinuierlich zudosiert. Parallel zu Zulauf 2 wurden 15,2 g einer 2,0 gew.-%igen wässrigen Lösung von Ammoniumperoxodisulfat kontinuierlich zudosiert. Nach Beendigung von Zulauf 2 ließ man das Polymerisationsgemisch noch 20 Minuten bei 90 °C nachreagieren. Danach wurde die erhaltene wässrige Polymerdispersion auf 75 °C abgekühlt und gleichzeitig beginnend 10,1 g einer 10 gew.-%igen wässrigen Lösung von tert-Butylhydroperoxid sowie in einem parallelen Zulauf 9,9 g einer 6 gew.-%igen wässrigen Lösung von Brüggolit® FF6 M (Reduktionsmittel der Firma Brüggemann GmbH & Co. KG) über 10 Minuten kontinuierlich zudosiert. Das Polymerisationsgemisch wurde im Anschluss 20 Minuten bei 70 °C gerührt, auf Raumtemperatur abgekühlt und unter Rühren mit 1,2 g 5 gew.-%igen wässrigen Lösung von Acticid® MBS (Biozid der Firma Thor) versetzt.

Zulauf 1 (homogene Mischung aus):

| | |
|---|---|
| 110,3 g | entionisiertes Wasser, |
| 12,0 g | Rhodafac® RS610/A25, |
| 2,4 g | einer 30 gew.-%igen wässrigen Lösung eines Fettalkoholpolyethylenoxidethersulfats (Disponil® FES 993 der Firma BASF SE), |
| 196,9 g | Styrol, |
| 196,9 g | 2-Ethylhexylacrylat, |
| 18,2 g | Sipomer® PAM-200, |
| 14,1 g | Methylmethacrylat, |
| 22,4 g | Acetoacetoxyethyl methacrylat, |
| 6,2 g | Acrylsäure |

Zulauf 2 (homogene Mischung aus):

| | |
|---|---|
| 42,4 g | entionisiertes Wasser, |
| 2,4 g | Rhodafac® RS610/A25, |
| 0,6 g | Disponil® FES 993, |
| 12,1 g | Styrol, |
| 133,3 g | n-Butylmethacrylat |

Die erhaltene Polymerdispersion wurde vor der weiteren Verwendung über einen 125 µm Filter filtriert, wobei ein Koagulatgehalt < 0,1 Gew.-% ermittelt wurde.

Die nach der Filtration erhaltene wässrige Polymerdispersion wies einen Feststoffgehalt von 50,1 Gew.-% auf. Der gewichtsmittlere Teilchendurchmesser wurde zu 93 nm und der Feinkoagulatgehalt zu 227 µg/g wässriger Polymerdispersion bestimmt. Der pH-Wert wurde am Ende der ersten Polymerisationsstufe zu 4,2 und am Ende der zweiten Polymerisationsstufe zu 6,1 bestimmt. Das Dispersionspolymerisat wies eine Glasübergangstemperatur $Tg^1$ von -2,8 °C und eine Glasübergangstemperatur $Tg^2$ von 16 °C auf.

Dabei wurden die Feststoffgehalte der erhaltenen wässrigen Polymerdispersionen generell bestimmt, indem eine definierte Menge der wässrigen Polymerdispersion (ca. 0,8 g) mit Hilfe des Feuchtebestimmers HR73 der Firma Mettler Toledo bei einer Temperatur von 160 °C bis zur Gewichtskonstanz getrocknet wurde. Es wurden jeweils zwei Messungen durchgeführt. Der in den Beispielen angegebene Wert entspricht dem Mittelwert dieser beiden Messungen.

Für die Bestimmung des Feinkoagulatgehalts wurden generell jeweils 3,0 g der erhaltenen wässrigen Polymerdispersion mit entionisiertem Wasser auf 1500 g verdünnt. Mit dem Probenzuführgerät PZG3 der Firma Klotz würde nach Vorspühlung 1000 g der erhaltenen verdünnten wässrigen Polymerdispersion bei Raumtemperatur in 2,5 Minuten durch den Sensor LDS 2x2 der Firma Klotz gepumpt. In Kombination mit der Auswerte- und Steuerungseinheit (ABAKUS) mit PC-Anbindung führte das zu den jeweils angegebenen Werten, die den gezählten Partikeln im Bereich 10-500 µm entsprechen.

Wesentlich ist, dass Koagulatgehlate > 0,1 Gew.-% und Feinkoagulatgehalte > 1000 µg/g wässriger Polymerdispersion zu Problemen bei der Filtration (beispielsweise durch Verstopfung der Filter) führen können und in der Regel mit Nachteilen bei der Anwendung in Beschichtungsmitteln durch das Auftreten von Oberflächendefekten und/oder Fehlstellen in der Beschichtung einher gehen.

Der gewichtsmittlere Teilchendurchmesser wurde generell nach ISO 13321 mit einem High Performance Particle Sizer der Fa. Malvern bei 22 °C und einer Wellenlänge von 633 nm bestimmt.

Die pH-Wertbestimmung erfolgte generell mittels einer geeichten pH Elektrode InPro® 325X der Firma Mettler-Toledo GmbH.

Die Glasübergangstemperaturen wurden generell gemäß DIN EN ISO 11357-2 (2013-09) über Differential Scanning Calorimetry (DSC) mit einer Aufheizrate von 20 K/min mittels eines DSC Q2000 der Firma TA Instruments ermittelt. Dabei wurden die Mittelpunkttemperaturen zur Bestimmung herangezogen.

Beispiel 2 (Dispersion 2)

Die Herstellung von Beispiel 2 erfolgte völlig analog der Herstellung von Beispiel 1 mit dem Unterschied, dass in Zulauf 1 die Acrylsäure durch die gleich Menge an Methacrylsäure ersetzt wurde.

Die erhaltene Polymerdispersion wies einen Feststoffgehalt von 50,1 Gew.-% auf. Der gewichtsmittlere Teilchendurchmesser betrug 99 nm. Der Koagulatgehalt betrug < 0,1 % und der Feinkoagulatgehalt wurde zu 336 µg/g bestimmt. Das Dispersionspolymerisat wies eine Glasübergangstemperatur $Tg^1$ von -3,5 °C und eine Glasübergangstemperatur $Tg^2$ von 17 °C auf.

Beispiel 3 (Dispersion 3)

Die Herstellung von Beispiel 3 erfolgte völlig analog der Herstellung von Beispiel 1 mit dem Unterschied, dass die Zuläufe 1 und 2 folgende Zusammensetzung aufwiesen:

<u>Zulauf 1</u> (homogene Mischung aus):

| | |
|---:|---|
| 110,3 g | entionisiertes Wasser, |
| 12,0 g | Rhodafac® RS610/A25, |
| 2,4 g | Disponil® FES 993, |
| 168,6 g | Styrol, |
| 176,5 g | 2-Ethylhexylacrylat, |
| 13,1 g | Sipomer® PAM-200, |
| 73,1 g | Methylmethacrylat, |
| 6,0 g | Acetoacetoxyethylmethacrylat, |
| 6,7 g | Acrylsäure |

<u>Zulauf 2</u> (homogene Mischung aus):

| | |
|---:|---|
| 42,4 g | entionisiertes Wasser, |
| 2,4 g | Rhodafac® RS610/A25, |
| 0,6 g | Disponil® FES 993, |
| 72,6 g | Styrol, |
| 52,4 g | n-Butylmethacrylat, |
| 8,8 g | Methylmethacrylat, |
| 22,2 g | 2-Ethylhexylacrylat |

Die erhaltene Polymerdispersion wies einen Feststoffgehalt von 49,7 Gew.-% auf. Der gewichtsmittlere Teilchendurchmesser wurde zu 121 nm, der Koagulatgehalt zu < 0,1 Gew.-% und der Feinkoagulatgehalt zu 507 µg/g bestimmt. Die ermittelten Glasübergangstemperaturen $Tg^1$ und $Tg^2$ betrugen 6 °C und 23 °C.

Beispiel 4 (Dispersion 4)

In einem mit Dosiereinrichtungen und Temperaturreglung ausgerüstetem 2 l-Polymerisationsgefäß wurden bei 20 bis 25 °C (Raumtemperatur) unter Stickstoffatmosphäre

| | |
|---|---|
| 339,0 g | entionisiertes Wasser, und |
| 10,3 g | von Rhodafac® RS610/A25 |

vorgelegt und unter Rühren auf 90 °C aufgeheizt. Bei Erreichung dieser Temperatur wurde 30,4 g von Zulauf 1 zugegeben, daran anschließend 33,8 g einer 2,2 gew.-%igen wässrigen Lösung von Ammoniumperoxodisulfat innerhalb von 2 Minuten zudosiert und danach bei vorgenannter Temperatur noch 10 Minuten nachgerührt. Zeitgleich beginnend mit der Dosierung der Ammoniumperoxodisulfat-Lösung wurden 40,5 g einer 4,6 gew.-%igen wässrigen Lösung von Ammoniak über einen Zeitraum von 175 Minuten mit gleichbleibendem Mengenstrom kontinuierlich zudosiert.

Nach Ablauf der zehnminütigen Nachrührzeit wurde unter Aufrechterhaltung einer Temperatur von 90 °C der Rest von Zulauf 1 innerhalb von 90 Minuten gleichbleibendem Mengenstrom kontinuierlich zudosiert. Zeitgleich beginnend mit dem Restzulauf von Zulauf 1 wurden 52,8 g einer 2,4 gew.-%igen wässrigen Lösung von Ammoniumperoxodisulfat ebenfalls innerhalb von 90 Minuten kontinuierlich zudosiert. Danach ließ man das Polymerisationsgemisch noch 15 Minuten bei 90 °C nachreagieren. Danach wurde unter Aufrechterhaltung einer Temperatur von 90 °C innerhalb von 65 Minuten bei gleichbleibendem Mengenstrom Zulauf 2 kontinuierlich zudosiert. Parallel zu Zulauf 2 wurden 15,2 g einer 2,0 gew.-%igen wässrigen Lösung von Ammoniumperoxodisulfat kontinuierlich zudosiert. Nach Beendigung von Zulauf 2 ließ man das Polymerisationsgemisch noch 20 Minuten bei 90 °C nachreagieren. Danach wurde die erhaltene wässrige Polymerdispersion auf 75 °C abgekühlt und gleichzeitig beginnend 16,2 g einer 6,8 gew.-%igen wässrigen Lösung von tert-Butylhydroperoxid sowie in einem parallelen Zulauf 16,0 g einer 4 gew.-%igen wässrigen Lösung von Brüggolit® FF6 M über 10 Minuten kontinuierlich zudosiert. Das Polymerisationsgemisch wurde im Anschluss 20 Minuten bei 70 °C gerührt, auf Raumtemperatur abgekühlt und unter Rühren mit 14,7 g 0,4 gew.-%igen wässrigen Lösung von Acticid® MBS versetzt.

<u>Zulauf 1</u> (homogene Mischung aus):

| | |
|---|---|
| 79,7 g | entionisiertes Wasser, |
| 12,9 g | Rhodafac® RS610/A25, |
| 2,6 g | Disponil® FES 993, |
| 208,5 g | Styrol, |
| 208,5 g | 2-Ethylhexylacrylat, |
| 19,5 g | Sipomer® PAM-200, |
| 15,2 g | Methylmethacrylat, |
| 24,1 g | Acetoacetoxyethylmethacrylat, |
| 6,7 g | Acrylsäure |
| 6,5 g | Vinyltriethoxysilan |

<u>Zulauf 2</u> (homogene Mischung aus):

| | |
|---|---|
| 33,5 g | entionisiertes Wasser, |
| 2,6 g | Rhodafac® RS610/A25, |
| 0,7 g | Disponil® FES 993, |
| 13,0 g | Styrol, |
| 143,3 g | n-Butylmethacrylat |

Die erhaltene Polymerdispersion wurde vor der weiteren Verwendung über einen 125 μm Filter filtriert, wobei ein Koagulatgehalt < 0,1 Gew.-% ermittelt wurde.

Die nach der Filtration erhaltene wässrige Polymerdispersion wies einen Feststoffgehalt von 49,8 Gew.-% auf. Der gewichtsmittlere Teilchendurchmesser wurde zu 98 nm und der Feinkoagulatgehalt zu 203 µg/g wässriger Polymerdispersion bestimmt. Der pH-Wert wurde am Ende der ersten Polymerisationsstufe zu 4,1 und am Ende der zweiten Polymerisationsstufe zu 6,0 bestimmt. Das Dispersionspolymerisat wies eine Glasübergangstemperatur $Tg^1$ von -5,4 °C und eine Glasübergangstemperatur $Tg^2$ von 13 °C auf.

Beispiel 5 (Dispersion 5)

Die Herstellung von Beispiel 5 erfolgte völlig analog der Herstellung von Beispiel 1 mit dem Unterschied, dass 32,6 g einer 5,3 gew.-%igen wässrigen Lösung von Natriumhydroxid anstelle von Ammoniak eingesetzt wurden.
Die nach der Filtration erhaltene wässrige Polymerdispersion wies einen Feststoffgehalt von 50,2 Gew.-% auf. Der gewichtsmittlere Teilchendurchmesser wurde zu 106 nm, der Koagulatgehalt zu < 0,1 Gew.-% und der Feinkoagulatgehalt zu 373 µg/g wässriger Polymerdispersion bestimmt. Der pH-Wert wurde am Ende der ersten Polymerisationsstufe zu 4,0 und am Ende der zweiten Polymerisationsstufe zu 5,9 bestimmt. Das Dispersionspolymerisat wies eine Glasübergangstemperatur $Tg^1$ von -2,3 °C und eine Glasübergangstemperatur $Tg^2$ von 15,7 °C auf.

Beispiel 6 (Dispersion 6)

Die Herstellung von Beispiel 6 erfolgte völlig analog der Herstellung von Beispiel 1 mit dem Unterschied, dass 32,6 g einer 5,3 gew.-%igen wässrigen Lösung von Trimethylamin anstelle von Ammoniak eingesetzt wurden.
Die nach der Filtration erhaltene wässrige Polymerdispersion wies einen Feststoffgehalt von 49,9 Gew.-% auf. Der gewichtsmittlere Teilchendurchmesser wurde zu 98 nm, der Koagulatgehalt zu < 0,1 Gew.-% und der Feinkoagulatgehalt zu 308 µg/g wässriger Polymerdispersion bestimmt. Der pH-Wert wurde am Ende der ersten Polymerisationsstufe zu 4,5 und am Ende der zweiten Polymerisationsstufe zu 6,2 bestimmt. Das Dispersionspolymerisat wies eine Glasübergangstemperatur $Tg^1$ von -2,1 °C und eine Glasübergangstemperatur $Tg^2$ von 16,5 °C auf.

Vergleichsbeispiel 1

Die Herstellung von Vergleichsbeispiel 1 erfolgte völlig analog der Herstellung von Beispiel 1 mit dem Unterschied, dass Zulauf 1 kein Sipomer® PAM-200 und Zulauf 2 zusätzlich 18,2 g Sipomer® PAM-200 enthielt.
Das Polymerisationsgemisch koagulierte während des Zulaufs 1, so dass der Versuch abgebrochen werden musste.

Vergleichsbeispiel 2

Die Herstellung von Vergleichsbeispiel 2 erfolgte völlig analog der Herstellung von Beispiel 1 mit dem Unterschied, dass Zulauf 1 keine Acrylsäure und Zulauf 2 zusätzlich 6,2 g Acrylsäure enthielt.
Das Polymerisationsgemisch koagulierte während des Zulaufs 1, so dass der Versuch abgebrochen werden musste.

Vergleichsbeispiel 3

Die Herstellung von Vergleichsbeispiel 3 erfolgte völlig analog der Herstellung von Beispiel 1 mit dem Unterschied, dass in der Vorlage 25,8 g Disponil® FES 993 anstelle von 12,0 g Rhodafac® RS610/A25, im Zulauf 1 insgesamt 28,1 g und im Zulauf 2 insgesamt 5,7 g Disponil® FES 993 und jeweils kein Rhodafac® RS610/A25 eingesetzt wurde.
Das Polymerisationsgemisch koagulierte während des Zulaufs 1, so dass der Versuch abgebrochen werden musste.

Vergleichsbeispiel 4

Die Herstellung von Vergleichsbeispiel 4 erfolgte völlig analog der Herstellung von Beispiel 1 mit dem Unterschied, dass keine 5,3 gew.-%ige wässrige Lösung von Ammoniak eingesetzt wurde, wobei der Polymerisationsansatz in der ersten Polymerisationsstufe bei einem pH-Wert von 2,3 koagulierte, so dass der Versuch abgebrochen werden musste.

Vergleichsbeispiel 5 (Vergleichsdispersion V5)

Die Herstellung von Vergleichsbeispiel 5 erfolgte völlig analog der Herstellung von Beispiel 1 mit dem Unterschied, dass 16,3 g anstelle von 32,6 g einer 5,3 gew.-%igen wässrigen Lösung von Ammoniak eingesetzt wurden.

Die nach der Filtration erhaltene wässrige Polymerdispersion wies einen Feststoffgehalt von 50,1 Gew.-% auf. Der gewichtsmittlere Teilchendurchmesser wurde zu 90 nm, der Koagulatgehalt zu < 0,1 Gew.-% und der Feinkoagulatgehalt zu 689 µg/g wässriger Polymerdispersion bestimmt. Der pH-Wert wurde am Ende der ersten Polymerisationsstufe zu 2,9 und am Ende der zweiten Polymerisationsstufe zu 5,3 bestimmt. Das Dispersionspolymerisat wies eine Glasübergangstemperatur $Tg^1$ von -2,8 °C und eine Glasübergangstemperatur $Tg^2$ von 15 °C auf.

Vergleichsbeispiel 6 (Vergleichsdispersion V6)

Die Herstellung von Vergleichsbeispiel 6 erfolgte völlig analog der Herstellung von Beispiel 1 mit dem Unterschied, dass 48,9 g anstelle von 32,6 g einer 5,3 gew.-%igen wässrigen Lösung von Ammoniak eingesetzt wurden.

Die nach der Filtration erhaltene wässrige Polymerdispersion wies einen Feststoffgehalt von 49,8 Gew.-% auf. Der gewichtsmittlere Teilchendurchmesser wurde zu 96 nm, der Koagulatgehalt zu 0,2 Gew.-% und der Feinkoagulatgehalt zu 1083 µg/g wässriger Polymerdispersion bestimmt. Der pH-Wert wurde am Ende der ersten Polymerisationsstufe zu 4,9 und am Ende der zweiten Polymerisationsstufe zu 7,3 bestimmt. Das Dispersionspolymerisat wies eine Glasübergangstemperatur $Tg^1$ von -2,0 °C und eine Glasübergangstemperatur $Tg^2$ von 15 °C auf.

Vergleichsbeispiel 7 (Vergleichsdispersion V7)

In einem mit Dosiereinrichtungen und Temperaturreglung ausgerüstetem 2 l-Polymerisationsgefäß wurden bei Raumtemperatur unter Stickstoffatmosphäre

| | |
|---|---|
| 260,0 g | entionisiertes Wasser, und |
| 12,0 g | von Rhodafac® RS610/A25 |

vorgelegt und unter Rühren auf 90 °C aufgeheizt. Bei Erreichung dieser Temperatur wurde 30,4 g von Zulauf 1 zugegeben, daran anschließend 33,8 g einer 2,5 gew.-%igen wässrigen Lösung von Ammoniumperoxodisulfat innerhalb von 2 Minuten zudosiert und danach bei vorgenannter Temperatur noch 10 Minuten nachgerührt. Zeitgleich beginnend mit der Dosierung der Ammoniumperoxodisulfat-Lösung wurden 32,6 g einer 5,3 gew.-%igen wässrigen Lösung von Ammoniak über einen Zeitraum von 175 Minuten mit gleichbleibendem Mengenstrom kontinuierlich zudosiert.

Nach Ablauf der zehnminütigen Nachrührzeit wurde unter Aufrechterhaltung einer Temperatur von 90 °C der Rest von Zulauf 1 innerhalb von 175 Minuten mit gleichbleibendem Mengenstrom kontinuierlich zudosiert. Zeitgleich beginnend mit dem Restzulauf von Zulauf 1 wurden 60,7 g einer 2,5 gew.-%igen wässrigen Lösung von Ammoniumperoxodisulfat ebenfalls innerhalb von 170 Minuten kontinuierlich zudosiert. Nach Beendigung von Zulauf 1 ließ man das Polymerisationsgemisch noch 20 Minuten bei 90 °C nachreagieren. Danach wurde die erhaltene wässrige Polymerdispersion auf 75 °C abgekühlt und gleichzeitig beginnend 10,1 g einer 10 gew.-%igen wässrigen Lösung von tert-Butylhydroperoxid sowie in einem parallelen Zulauf 9,9 g einer 6 gew.-%igen wässrigen Lösung von Brüggolit® FF6 M über 10 Minuten kontinuierlich zudosiert. Das Polymerisationsgemisch wurde im Anschluss 20 Minuten bei 70 °C gerührt, auf Raumtemperatur abgekühlt und unter Rühren mit 1,2 g 5 gew.-%igen wässrigen Lösung von Acticid® MBS versetzt.

Zulauf 1 (homogene Mischung aus):

| | |
|---|---|
| 152,7 g | entionisiertes Wasser, |
| 14,4 g | Rhodafac® RS610/A25, |
| 3,0 g | Disponil® FES 993, |
| 209,0 g | Styrol, |
| 196,9 g | 2-Ethylhexylacrylat, |
| 18,2 g | Sipomer® PAM-200, |
| 14,1 g | Methylmethacrylat, |
| 133,3 g | n-Butylmethacrylat |
| 22,4 g | Acetoacetoxyethylmethacrylat, |
| 6,2 g | Acrylsäure |

Die nach der Filtration erhaltene wässrige Polymerdispersion wies einen Feststoffgehalt von 50,0 Gew.-% auf. Der gewichtsmittlere Teilchendurchmesser wurde zu 98 nm, der Koagulatgehalt zu < 0,1 Gew.-% und der Feinkoagulatgehalt zu 467 µg/g wässriger Polymerdispersion bestimmt. Der pH-Wert der wässrigen Polymerdispersion wurde zu 5,1 bestimmt. Das Dispersionspolymerisat wies eine Glasübergangstemperatur Tg von 14 °C auf.

Vergleichsbeispiel 8 (Vergleichsdispersion V8)

Die Herstellung von Vergleichsbeispiel 8 erfolgte völlig analog der Herstellung von Beispiel 1 mit dem Unterschied, dass in Zulauf 1 96,9 g anstelle von 196,9 g Styrol und 296,9 g anstelle von 196,9 g 2-Ethylhexylacrylat eingesetzt wurden.

Die nach der Filtration erhaltene wässrige Polymerdispersion wies einen Feststoffgehalt von 49,5 Gew.-% auf. Der gewichtsmittlere Teilchendurchmesser wurde zu 127 nm mit einer zweiten Fraktion bei 880 nm, der Koagulatgehalt zu 1 Gew.-% und der Feinkoagulatgehalt zu 8744 µg/g wässriger Polymerdispersion bestimmt. Der pH-Wert wurde am Ende der ersten Polymerisationsstufe zu 4,2 und am Ende der zweiten Polymerisationsstufe zu 6,7 bestimmt. Das Dispersionspolymerisat wies eine Glasübergangstemperatur $Tg^1$ von -32 °C und eine Glasübergangstemperatur $Tg^2$ von -8 °C auf.

Anwendungstechnische Untersuchungen

Für die anwendungstechnischen Untersuchungen wurden von den erhaltenen wässrigen Polymerdispersionen der Beispiele und der Vergleichsbeispiele jeweils ein Klarlack und ein pigmentierter Korrosionsschutzlack hergestellt. Hierzu wurden zuerst die Polymerdispersionen 1 bis 6 sowie V5 bis V8 mit entionisiertem Wasser auf einen Feststoffgehalt von 49,5 Gew.-% verdünnt.

Herstellung der Klarlacke

Die Herstellung der Klarlacke erfolgte dergestalt, dass jeweils 96,0 g der auf 49,5 Gew.-% verdünnten wässrigen Polymerdispersionen 1 bis 6 sowie V5 bis V8 mit einer 50 gew.-%igen wässrigen Lösung von Dimethylethanolamin der Firma Huntsman Corporation bei Raumtemperatur unter Rühren auf einen pH-Wert von 9,5 eingestellt wurden, anschließend jeweils 3 g des organischen Lösungsmittels Texanol® der Firma Eastman Chemical sowie 1 g des Korrosionsschutzinhibitors CHE®-COAT-CI LNF A4 der Firma C.H. Erbslöh KG zugegeben und homogen vermischt wurden. Die erhaltenen Klarlacke werden nachfolgend Klarlack 1 bis 6 bzw. V5 bis V8 genannt.

Frühwassertest

Die zu prüfenden Klarlacke 1 bis 6 sowie V5 bis V8 wurden jeweils auf eine Oberfläche eines 200 x 80 mm großen gereinigten und fettfreien, unverzinkten Stahlbleches mit einem Kastenrakel aufgebracht, wobei die Spaltgröße dabei so gewählt wurde, dass sich eine Trockenschichtdicke von 40 bis 85 µm ergab. Die so beschichteten Stahlbleche (im Folgenden Stahlbleche 1 bis 6 sowie V5 bis V8 genannt) wurden jeweils für zwei Stunden bei 23 °C und 50 % relativer Luftfeuchtigkeit in einer Klimakammer getrocknet. Die eigentliche Prüfung erfolgte dann dergestalt, dass die Stahlbleche 1 bis 6 sowie V5 bis V8 bei Raumtemperatur für 24 Stunden senkrecht in ein Wasserbad gestellt wurden, das mit entionisiertem Wasser bis zu einer Füllhöhe von 15 cm gefüllt war. Daran anschließend wurden die Stahlbleche 1 bis 6 sowie V5 bis V8 aus dem Wasserbad entnommen, mit einem weichen Baumwolltuch trocken getupft und die jeweilige Farbtonveränderung zwischen der mit Wasser benetzten und der nicht benetzen Fläche beurteilt. Dabei wurde die Farbtonveränderung visuell nach folgender Skala bewertet: 0 (keine Änderung) bis 5 (deutliche Farbtonveränderung über die ganze Fläche). Die erhaltenen Ergebnisse sind in folgender Tabelle 1 aufgelistet.

Tabelle 1: Ergebnisse des Frühwassertestes

| Stahlblech | Bewertung |
|---|---|
| 1 | 0 |
| 2 | 0 |
| 3 | 0 |
| 4 | 1 |
| 5 | 1 |
| 6 | 0 |

(fortgesetzt)

| Stahlblech | Bewertung |
|---|---|
| V5 | 4 |
| V6 | 2 |
| V7 | 2 |
| V8 | 3 |

Herstellung der pigmentierten Korrosionsschutzlacke

167,9 g der auf 49,5 Gew.-% verdünnten wässrigen Polymerdispersionen 1 bis 6 sowie V5 bis V8 wurden jeweils bei Raumtemperatur mit 1,5 g des handelsüblichen Entschäumers für Lacke BYK® 022 (Fa. Byk GmbH; Mischung von Polysiloxanen und hydrophoben Feststoffen in Polyglykol) versetzt. Anschließend wurden mittels eines Dispermaten jeweils 15,0 g entionisiertes Wasser, 1,0 g 25 gew.-%ige wässrige Ammoniaklösung, 1,5 g Dispex® Ultra PA4570 (BASF SE; Dispergieradditiv, basierend auf modifiziertem Polyacrylat) und 4,5 g Dispex® CX 4231 (BASF SE; Dispergieradditiv auf Basis eines Ammoniumsalzes eines organischen Säure-Copolymers in Wasser) zugegeben. Unter Rühren wurde weiterhin eine Mischung aus 2,2 g Phenoxypropanol (Filmbildehilfsmittel) und 2,2 g Benzin (Siedebereich 180 bis 210 °C; Filmbildehilfsmittel) eingearbeitet. Anschließend wurden 25,5 g des Hämatit-Pigmentes Bayferrox® 130 M (Fa. Lanxess AG), 10,8 g Talkum 20 M 2 (Fa. Luzenac; Füllstoff: Magnesiumsilikat), 38,3 g Litopone® L (Fa. Sachtleben, Füllstoff auf Basis Bariumsulfat und Zinksulfid), sowie 24,6 g Heucophos® ZMP (Fa. Heubach, Korrosionsschutzpigment auf Basis Zinkphosphat) zugegeben. Daraufhin wurden weitere 0,8 g BYK® 022 sowie 1,1 g einer 1:1-Mischung aus Wasser und Korrosionsinhibitor L 1 (Fa. C.H. Erbslöh KG) zugegeben. Die gesamte Mischung wurde für 10 Minuten in einem Dissolver mit einer Zahnscheibe (Durchmesser 5 cm; 2000 Umdrehungen pro Minute) vorgemischt und anschließend 20 Minuten mit einer doppelten Teflonscheibe (Durchmesser 5 cm; 2300 Umdrehungen pro Minute) und 200 g Glasperlen (Durchmesser 3 mm) dispergiert. Danach wurden die Glasperlen abgesiebt. Zum Abschluss wurden die jeweiligen Ansätze mit 1,8 g 25 gew.-%iger wässriger Ammoniaklösung sowie einer Mischung aus 0,3 g einer 25 gew.-%igen wässrigen Lösung eines handelsüblichen Verdickungsmittels auf Urethan-Basis (Rheovis® PU 1280, Fa. BASF SE) und 1,0 g Butylglykol (Lösungsmittel) versetzt sowie gegebenenfalls der pH-Wert mit 25 gew.-%iger wässriger Ammoniaklösung auf 9,5 eingestellt. Die erhaltenen Korrosionsschutzformulierungen 1 bis 6 sowie V5 bis V8 wiesen einen Feststoffgehalt von 61 Gew.-% und eine Pigment/Volumenkonzentration von 23 % auf. Mit entionisiertem Wasser wurden die erhaltenen Korrosionsschutzformulierungen auf eine Viskosität von ca. 300 mPas (bei Raumtemperatur bestimmt mittels Rotothinner 455N Kugel der Firma Sheen Instruments) verdünnt und die jeweiligen Feststoffgehalte bestimmt.

Von Bedeutung in diesem Zusammenhang ist, dass die Korrosionsschutzformulierung V6 unmittelbar nach ihrer Herstellung eindickte, so dass mit dieser Formulierung keine Beschichtung eines Stahlbleches erfolgen konnte.

Salzsprühtest

Zur Prüfung der Korrosionsschutzeigenschaften wurde ein Salzsprühtest gemäß DIN EN ISO 7253 (mit einer Prüfdauer von 360 Stunden) mittels einer 5 gew.-%igen wässrigen Natriumchlorid-Lösung durchgeführt. Dafür wurden die verdünnten Korrosionsschutzformulierungen 1 bis 6 sowie V5, V7 und V8 jeweils auf eine Seite eines 200 x 80 mm großen gereinigten unverzinkten Stahlblechs mit einem Kastenrakel aufgebracht, wobei die Spaltgröße jeweils so gewählt wurde, dass eine Trockenschichtdicke von 60 bis 100 μm resultierte. Die nach der Beschichtung erhaltenen Prüfbleche wurden für 6 Tage in einer Klimakammer bei 23 °C und 50 % relativer Luftfeuchtigkeit gelagert und dabei getrocknet. Anschließend wurden die beschichteten Prüfbleche noch 24 Stunden bei einer Temperatur von 50 °C gelagert. Nach Abkühlung auf Raumtemperatur wurden die Rückseiten der jeweiligen Prüfbleche zum Schutz vor Korrosion mit einem Lösemittel-basierten Lack beschichtet und anschließend 24 Stunden bei Raumtemperatur getrocknet. Vor der eigentlichen Prüfung wurden die Kanten der jeweiligen Prüfbleche noch mit einem Kunststofffilm abgeklebt. Die jeweiligen Prüfbleche wurden nun auf der beschichteten Seite mit einem Ritzstachel bis auf den Stahl geritzt und für 360 Stunden mit Salzwasser besprüht. Die Auswertung der erhaltenen Prüfbleche 1 bis 6 sowie V5, V7 und V8 erfolgte hierbei durch optischen Vergleich der getesteten Proben mit den von DIN EN ISO 7253 vorgegebenen Standards. Das Korrosionsverhalten der einzelnen Prüfbleche wurde anhand der Unterrostung am Ritz, der Flächenkorrosion sowie der Haftung mittels Gitterschnitt wie folgt bewertet:

Unterrostung am Ritz (analog DIN EN ISO 4628-8; 2013):

Ausgehend von den künstlichen Verletzungsstellen bildete sich Rost unterhalb den Beschichtungen. Die in Tabelle 2 angegebenen Werte geben die maximale Entfernung in mm des dabei gebildeten Eisenoxids gemessen von

den Ritzen aus an. Dabei wurden vor der Abmusterung die losen Beschichtungen um die Ritze mit Hilfe eines Klebebandes entfernt. Erfindungsgemäß sind die gemessenen Werte umso besser zu bewerten je niedriger sie sind.

Flächenkorrosion:

Die Beurteilung erfolgte durch visuelle Beurteilung des Anteils der korrodierten Fläche im Verhältnis zur Gesamtfläche der Prüfbleche. Die in Tabelle 2 angegebenen Werte stellen den Prozentanteil der korrodierten Flächen dar. Dabei sind die gemessenen Werte umso besser zu bewerten, je niedriger sie sind.

Haftung (Gitterschnitt gemäß DIN EN ISO 2409):

Die Haftung der Korrosionsschutzbeschichtungen auf dem Untergrund wurde mittels des Gitterschnitt-Tests ermittelt. Hierzu wurden nach dem Salzsprühtest ein Gitter aus mehreren Schnitten (Linienabstand 2 mm) in die jeweilige trocken getupfte Korrosionsschutzbeschichtung eingeschnitten, mit einem Klebeband beklebt und danach das Klebeband abgezogen. Bewertet wurde das Aussehen des Gitters nach Abziehen des Klebebandes. Es wurden Noten von 0 bis 5 nach folgender Skala vergeben:

Gt 0 Die Schnittränder waren vollkommen glatt und keines der Quadrate der Gitter war abgeplatzt.
Gt 1 Die Beschichtung war längst der Schnittränder abgeplatzt, die abgeplatzte Fläche war aber nicht größer als 15 % der Gitterschnittfläche.
Gt 2 Die abgeplatzte Gitterfläche war größer als 15 % aber nicht größer als 35 %.
Gt 3 Die Beschichtung war längst der Schnittränder teilweise oder ganz in breiten Streifen abgeplatzt oder einige Quadrate waren ganz oder teilweise abgeplatzt.
Gt 4 Die betroffene Gitterschnittfläche war größer als 35 % aber nicht größer als 65 %.
Gt 5 Jedes Abplatzen, das stärker als GT 4 eingestuft werden konnte.

Die dabei erhaltenen Ergebnisse sind ebenfalls in nachfolgender Tabelle 2 aufgelistet.

Tabelle 2: Ergebnisse des Salzsprühtestes

| Prüfblech | Unterrostung am Ritz [in mm] | Flächenkorrosion [in %] | Gitterschnitt |
|---|---|---|---|
| 1 | 5 | <5 | Gt 0 |
| 2 | 8 | <5 | Gt 1 |
| 3 | 6 | <5 | Gt 0 |
| 4 | 2 | <5 | Gt 0 |
| 5 | 9 | 5 | Gt 1 |
| 6 | 7 | <5 | Gt 0 |
| V5 | 20 | 15 | Gt 2 |
| V7 | 10 | 10 | Gt 1 |
| V8 | 15 | 20 | Gt 5 |

Bestimmung der Filmhärte

Die Bestimmung der Filmhärte erfolgte durch die Pendeldämpfungsprüfung nach König gemäß DIN EN ISO 1522. Dabei erfolgte die Bestimmung dergestalt, dass die verdünnten Korrosionsschutzformulierungen 1 bis 6 sowie V5, V7 und V8 jeweils auf eine Seite eines 200 x 80 mm großen gereinigten unverzinkten Stahlblechs mit einem Kastenrakel aufgebracht wurden, wobei die Spaltgröße jeweils so gewählt wurde, dass eine Trockenschichtdicke von 60 bis 100 $\mu$m resultierte. Danach wurden die erhaltenen beschichteten Prüfbleche für 20 Stunden bei 50 °C in einem Trockenschrank gelagert und anschließend auf Raumtemperatur abgekühlt. Mit den dabei erhaltenen beschichteten Stahlblechen wurde die Pendeldämpfungsprüfung nach König gemäß DIN EN ISO 1522 durchgeführt. Die bei der Prüfung der mit den Korrosionsschutzformulierungen 1 bis 6 sowie V5, V7 und V8 beschichteten Stahlbleche erhaltenen Ergebnisse sind in Tabelle 3 aufgelistet. Dabei ist die Beschichtung umso härter zu bewerten, je höher die Anzahl der Pendelschläge ist.

Tabelle 3: Ergebnisse der Filmhärten

| Stahblech | Anzahl der Pendelschläge |
|---|---|
| 1 | 17 |
| 2 | 18 |
| 3 | 30 |
| 4 | 22 |
| 5 | 17 |
| 6 | 16 |
| V5 | 15 |
| V7 | 8 |
| V8 | 5 |

Aus den Ergebnissen der anwendungstechnischen Untersuchungen ergibt sich unzweideutig, dass die mit den erfindungsgemäßen Polymerdispersionen hergestellte Korrosionsschutzformulierungen hergestellte Beschichtungen deutlich bessere Werte hinsichtlich der Unterrostung am Ritz, der Flächenkorrosion, des Gitterschnittes sowie der Filmhärten aufweisen als die mit den entsprechenden Vergleichsdispersionen hergestellten Korrosionsschutzformulierungen.

**Patentansprüche**

**1.** Verfahren zur Herstellung einer wässrigen Polymerdispersion durch radikalisch initiierte wässrige Emulsionspolymerisation, **dadurch gekennzeichnet, dass** in einem wässrigen Medium in Gegenwart wenigstens eines phosphorgruppenhaltigen Dispergierhilfsmittels in einer ersten Polymerisationsstufe (Polymerisationsstufe 1)

| | |
|---|---|
| ≥ 1,0 und ≤ 3,0 Gew.-% | wenigstens einer $\alpha,\beta$-monoethylenisch ungesättigten $C_3$- bis $C_6$-Mono- oder Dicarbonsäure (Monomere A1), |
| ≥ 1,5 und ≤ 6,0 Gew.-% | wenigstens einer ethylenisch ungesättigten Verbindung, welche wenigstens eine phosphorhaltige Gruppe aufweist (Monomere A2), |
| ≥ 91,0 und ≤ 97,5 Gew.-% | wenigstens einer ethylenisch ungesättigten Verbindung, welche sich von den Monomeren A1 und A2 unterscheidet (Monomere A3), |

wobei sich die Mengen der Monomeren A1 bis A3 auf 100 Gew.-% aufsummieren (Gesamtmonomerenmenge 1), radikalisch zu einem Polymeren 1 polymerisiert werden, und daran anschließend in Anwesenheit des Polymeren 1 in einer zweiten Polymerisationsstufe (Polymerisationsstufe 2)

| | |
|---|---|
| ≤ 0,1 Gew.-% | wenigstens einer $\alpha,\beta$-monoethylenisch ungesättigten $C_3$- bis |
| ≤ 0,1 Gew.-% | $C_6$-Mono- oder Dicarbonsäure (Monomere B1), wenigstens einer ethylenisch ungesättigten Verbindung, welche wenigstens eine phosphorhaltige Gruppe aufweist (Monomere B2), |
| ≥ 99,8 und ≤ 100 Gew.-% | wenigstens einer ethylenisch ungesättigten Verbindung, welche sich von den Monomeren B1 und B2 unterscheidet (Monomere B3), |

wobei sich die Mengen der Monomeren B1 bis B3 auf 100 Gew.-% aufsummieren (Gesamtmonomerenmenge 2), radikalisch zu einem Polymeren 2 polymerisiert werden, mit der Maßgabe, dass

- die Art und Mengen der Monomeren A1 bis A3 so gewählt werden, dass das daraus erhaltene Polymer 1 eine Glasübergangstemperatur $Tg^1$ im Bereich ≥ -10 und ≤ 15 °C aufweist, gemessen wie in der Beschreibung beschrieben,
- die Art und Mengen der Monomeren B1 bis B3 so gewählt werden, dass das daraus erhaltene Polymer 2 eine Glasübergangstemperatur $Tg^2$ aufweist, welche wenigstens 10 °C über der Glasübergangstemperatur $Tg^1$ liegt [$Tg^2 = Tg^1 + \geq 10$ °C], gemessen wie in der Beschreibung beschrieben,
- das Verhältnis von Gesamtmonomerenmenge 1 zu Gesamtmonomerenmenge 2 70 bis 85 Gew.-% zu 15 bis 30 Gew.-% beträgt, und
- die Menge des wenigstens einen phosphorgruppenhaltigen Dispergiermittels ≥ 0,5 Gew.-% bezogen auf die

Summe aus Gesamtmonomerenmenge 1 und Gesamtmonomerenmenge 2 (Gesamtmonomerenmenge) beträgt.

2. Verfahren nach Anspruch 1, **dadurch gekennzeichnet, dass** als Monomeren A1 Acrylsäure, Methacrylsäure, Itaconsäure, Fumarsäure, Maleinsäure und/oder Crotonsäure eingesetzt werden.

3. Verfahren nach einem der Ansprüche 1 oder 2, **dadurch gekennzeichnet, dass** als Monomeren A2 Vinylphosphonsäure und/oder ein (Meth)acryloxy(poly)alkoxyphosphat eingesetzt werden.

4. Verfahren nach einem der Ansprüche 1 bis 3, **dadurch gekennzeichnet, dass** das wenigstens eine Monomere A3 zu $\geq$ 80 Gew.-% ausgewählt ist aus der Gruppe umfassend n-Butylacrylat, n-Butylmethacrylat, 2-Ethylhexylacrylat, Styrol und Methylmethacrylat.

5. Verfahren nach einem der Ansprüche 1 bis 4, **dadurch gekennzeichnet, dass** die Art und Mengen der Monomeren A1 bis A3 sowie B1 bis B3 so gewählt werden, dass das erhaltene Polymer 1 eine Glasübergangstemperatur $Tg^1$ im Bereich $\geq$ -5 und $\leq$ 10 °C und das erhaltene Polymer 2 eine Glasübergangstemperatur $Tg^2$ im Bereich $\geq$ 10 und $\leq$ 40 °C aufweist.

6. Verfahren nach einem der Ansprüche 1 bis 5, **dadurch gekennzeichnet, dass** keinerlei Monomeren B1 und B2 eingesetzt werden.

7. Verfahren nach einem der Ansprüche 1 bis 6, **dadurch gekennzeichnet, dass** die Polymerisationsstufen 1 und 2 bei einem pH-Wert im Bereich $\geq$ 3 und $\leq$ 8, gemessen bei Raumtemperatur durchgeführt werden.

8. Verfahren nach Anspruch 7, **dadurch gekennzeichnet, dass** die pH-Werteinstellung mit einer Base erfolgt, deren Siedepunkt $\leq$ 20 °C, gemessen bei 1,013 bar (absolut), beträgt.

9. Verfahren nach einem der Ansprüche 1 bis 6, **dadurch gekennzeichnet, dass** das wenigstens eine Monomer A3 zu > 0 und $\leq$ 20 Gew.-% ausgewählt ist aus der Gruppe umfassend 2-Hydroxyethylacrylat, 2-Hydroxyethylmethacrylat, 2-(Acetoacetoxy)ethylmethacrylat, 2-Ureidoethylmethacrylat, Diacetonacrylamid, Glycidylmethacrylat, 3-(Methacryloyloxy)propyltrimethoxysilan, Vinyltriethoxysilan, Allylmethacrylat und 1,4-Butandioldiacrylat.

10. Wässrige Polymerdispersion erhältlich nach einem Verfahren gemäß einem der Ansprüche 1 bis 9.

11. Polymerpulver erhältlich durch Trocknung einer wässrigen Polymerdispersion gemäß Anspruch 10.

12. Verwendung einer wässrigen Polymerdispersion gemäß Anspruch 10 oder eines Polymerpulvers gemäß Anspruch 11 als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

13. Verwendung einer wässrigen Polymerdispersion gemäß Anspruch 10 oder eines Polymerpulvers gemäß Anspruch 11 als Bindemittel in wässrigen Korrosionsschutzformulierungen für Metalloberflächen.

14. Verfahren zum Beschichten von Metalloberflächen, **dadurch gekennzeichnet, dass** auf die Metalloberfläche eine wässrige Korrosionsschutzformulierung enthaltend eine wässrigen Polymerdispersion gemäß Anspruch 10 oder ein Polymerpulver gemäß Anspruch 11 aufgebracht und anschließend getrocknet wird.

15. Wässrige Korrosionsschutzformulierung enthaltend eine wässrigen Polymerdispersion gemäß Anspruch 10 oder ein Polymerpulver gemäß Anspruch 11.

## Claims

1. A process for producing an aqueous polymer dispersion by free-radically initiated aqueous emulsion polymerization, wherein in an aqueous medium in the presence of at least one phosphorus group-containing dispersing aid in a first polymerization stage (polymerization stage 1)

| | |
|---|---|
| ≥ 1.0% and ≤ 3.0% weight | byof at least one α,β-monoethylenically unsaturated $C_3$- to $C_6$-mono- or -dicarboxylic acid (monomers A1), |
| ≥ 1.5% and ≤ 6.0% weight | byof at least one ethylenically unsaturated compound having at least one phosphorus-containing group (monomers A2), |
| ≥ 91.0% and ≤ 97.5% weight | byof at least one ethylenically unsaturated compound distinct from the monomers A1 and A2 (monomers A3), |

wherein the amounts of the monomers A1 to A3 sum to 100% by weight (total monomer amount 1), are free-radically polymerized to afford a polymer 1 and subsequently in the presence of the polymer 1 in a second polymerization stage (polymerization stage 2)

| | |
|---|---|
| ≤ 0.1% by weight | of at least one α,β-monoethylenically unsaturated $C_3$- to $C_6$-mono- or -dicarboxylic acid (monomers B1), |
| ≤ 0.1% by weight | of at least one ethylenically unsaturated compound having at least one phosphorus-containing group (monomers B2), |
| ≥ 99.8% and ≤ 100% weight | byof at least one ethylenically unsaturated compound distinct from the monomers B1 and B2 (monomers B3), |

wherein the amounts of the monomers B1 to B3 sum to 100% by weight (total monomer amount 2), are free-radically polymerized to afford a polymer 2 with the proviso that

- the type and amounts of the monomers A1 to A3 are chosen such that the resulting polymer 1 has a glass transition temperature $Tg^1$ in the range ≥ -10°C and ≤ 15°C measured as described in the description,
- the type and amounts of the monomers B1 to B3 are chosen such that the resulting polymer 2 has a glass transition temperature $Tg^2$ which is at least 10°C above the glass transition temperature $Tg^1$ [$Tg^2 = Tg^1 + \geq 10$ °C] measured as described in the description,
- the ratio of total monomer amount 1 to total monomer amount 2 is 70% to 85% by weight to 15% to 30% by weight and
- the amount of the at least one phosphorus group-containing dispersant is ≥ 0.5% by weight based on the sum of total monomer amount 1 and total monomer amount 2 (total monomer amount).

**2.** The process according to claim 1, wherein the monomers A1 employed are acrylic acid, methacrylic acid, itaconic acid, fumaric acid, maleic acid and/or crotonic acid.

**3.** The process according to either of claims 1 and 2, wherein the monomers A2 employed are vinylphosphonic acid and/or a (meth)acryloxy(poly)alkoxy phosphate.

**4.** The process according to any of claims 1 to 3, wherein the at least one monomer A3 is to an extent of ≥ 80% by weight selected from the group comprising n-butyl acrylate, n-butyl methacrylate, 2-ethylhexyl acrylate, styrene and methyl methacrylate.

**5.** The process according to any of claims 1 to 4, wherein the type and amounts of the monomers A1 to A3 and B1 to B3 are chosen such that the obtained polymer 1 has a glass transition temperature $Tg^1$ in the range ≥ -5°C and ≤ 10°C and the obtained polymer 2 has a glass transition temperature $Tg^2$ in the range ≥ 10°C and ≤ 40°C.

**6.** The process according to any of claims 1 to 5, wherein no monomers B1 and B2 whatsoever are employed.

**7.** The process according to any of claims 1 to 6, wherein the polymerization stages 1 and 2 are performed at a pH in the range ≥ 3 and ≤ 8 measured at room temperature.

**8.** The process according to claim 7, wherein the pH adjustment is carried out with a base having a boiling point ≤ 20°C measured at 1.013 bar (absolute).

**9.** The process according to any of claims 1 to 6, wherein the at least one monomer A3 is to an extent of > 0% and ≤ 20% by weight selected from the group comprising 2-hydroxyethyl acrylate, 2-hydroxyethyl methacrylate, 2-(acetoacetoxy)ethyl methacrylate, 2-ureidoethyl methacrylate, diacetone acrylamide, glycidyl methacrylate, 3-(methacryloyloxy)propyltrimethoxysilane, vinyltriethoxysilane, allyl methacrylate and 1,4-butanediol diacrylate.

**10.** An aqueous polymer dispersion obtainable by a process according to any of claims 1 to 9.

**11.** A polymer powder obtainable by drying an aqueous polymer dispersion according to claim 10.

**12.** The use of an aqueous polymer dispersion according to claim 10 or of a polymer powder according to claim 11 as a binder in the production of adhesives, sealants, synthetic resin renders, paper coating slips, fiber nonwovens, flexible roof coatings and paints and also in sand consolidation, as a component in the production of textile or leather auxiliaries and impact modifiers or for modification of mineral binders and plastics.

**13.** The use of an aqueous polymer dispersion according to claim 10 or of a polymer powder according to claim 11 as a binder in aqueous anticorrosion formulations for metal surfaces.

**14.** A process for coating metal surfaces, wherein an aqueous anticorrosion formulation comprising an aqueous polymer dispersion according to claim 10 or a polymer powder according to claim 11 is applied to the metal surface and subsequently dried.

**15.** An aqueous anticorrosion formulation comprising an aqueous polymer dispersion according to claim 10 or a polymer powder according to claim 11.

## Revendications

**1.** Procédé pour la préparation d'une dispersion aqueuse de polymère par polymérisation en émulsion aqueuse à amorçage radicalaire, **caractérisé en ce que** dans un milieu aqueux, en présence d'au moins un adjuvant de dispersion contenant des groupes phosphorés, dans une première étape de polymérisation (étape de polymérisation 1) sont polymérisés par voie radicalaire

| | |
|---|---|
| ≥ 1,0 et ≤ 3,0 % | en poidsd' au moins un acide mono- ou dicarboxylique en $C_3$ à $C_6$ à insaturation $\alpha,\beta$-monoéthylénique (monomère A1), |
| ≥ 1,5 et ≤ 6,0 % | en poidsd'au moins un composé à insaturation éthylénique, qui comporte au moins un groupe phosphoré (monomère A2), |
| ≥ 91,0 et ≤ 97,5 % poids | end'au moins un composé à insaturation éthylénique qui est différent des monomères A1 et A2 (monomère A3), |

les quantités des monomères A1 à A3 faisant au total 100 % en poids (quantité totale de monomères 1), en un polymère 1, et à la suite de cela, dans une seconde étape de polymérisation (étape de polymérisation 2) sont polymérisés par voie radicalaire, en présence du polymère 1,

| | |
|---|---|
| ≤ 0,1 % en poids | d'au moins un acide mono- ou dicarboxylique en $C_3$ à $C_6$ à insaturation $\alpha,\beta$-monoéthylénique (monomère B1), |
| ≤ 0,1 % en poids | d'au moins un composé à insaturation éthylénique, qui comporte au moins un groupe phosphoré (monomère B2), |
| ≥ 99,8 et ≤ 100 % en poids | d'au moins un composé à insaturation éthylénique qui est différent des monomères B1 et B2 (monomère B3), |

les quantités des monomères B1 à B3 faisant au total 100 % en poids (quantité totale de monomères 2), en un polymère 2, étant entendu que

- la nature et les quantités des monomères A1 à A3 sont choisies de telle façon que le polymère 1 obtenu à partir de ceux-ci présente une température de transition vitreuse $Tg^1$ dans la plage de ≥ -10 à ≤ 15 °C, mesurée comme décrit dans la description,
- la nature et les quantités des monomères B1 à B3 sont choisies de telle façon que le polymère 2 obtenu à partir de ceux-ci présente une température de transition vitreuse $Tg^2$ qui se situe à au moins 10 °C au-dessus

de la température de transition vitreuse $Tg^1$ [$Tg^2 = Tg^1 + \geq 10$ °C], mesurée comme décrit dans la description,
• le rapport de quantité totale de monomères 1 à quantité totale de monomères 2 vaut 2,70 - 85 % en poids à 15 - 30 % en poids, et
• la quantité dudit au moins un adjuvant de dispersion contenant des groupes phosphorés est ≥ 0,5 % en poids par rapport à la somme de quantité totale de monomères 1 et quantité totale de monomères 2 (quantité totale de monomères)

**2.** Procédé selon la revendication 1, **caractérisé en ce qu'**en tant que monomères A1 sont utilisés l'acide acrylique, l'acide métahcrylique, l'acide itaconique, l'acide fumarique, l'acide maléique et/ou l'acide crotonique.

**3.** Procédé selon l'une quelconque des revendications 1 et 2, **caractérisé en ce qu'**en tant que monomères A2 sont utilisés l'acide vinylphosphonique et/ou un (méth) acryloxy(poly) alcoxyphosphate.

**4.** Procédé selon l'une quelconque des revendications 1 à 3, **caractérisé en ce qu'**au moins un monomère A3 est choisi à raison de ≥ 80 % en poids dans le groupe comprenant l'acrylate de n-butyle, le méthacrylate de n-butyle, l'acrylate de 2-éthylhexyle, le styrène et le méthacrylate de méthyle.

**5.** Procédé selon l'une quelconque des revendications 1 à 4, **caractérisé en ce que** la nature et les quantités des monomères A1 à A3 ainsi que B1 à B3 sont choisies de telle façon que le polymère 1 obtenu présente une température de transition vitreuse $Tg^1$ dans la plage de ≥ -5 à ≤ 10 °C et le polymère 2 obtenu présente une température de transition vitreuse $Tg^2$ dans la plage de ≥ 10 à ≤ 40 °C.

**6.** Procédé selon l'une quelconque des revendications 1 à 5, **caractérisé en ce que** les monomères B1 et B2 ne sont pas utilisés.

**7.** Procédé selon l'une quelconque des revendications 1 à 6, **caractérisé en ce que** les étapes de polymérisation 1 et 2 sont effectuées à un pH dans l'intervalle de ≥ 3 à ≤ 8, mesuré à la température ambiante.

**8.** "Procédé selon la revendication 7, caractérisé en e que l'ajustement du pH s'effectue avec une base dont le point d'ébullition est ≤ 20 °C mesuré sous 1,013 bar (absolu).

**9.** Procédé selon l'une quelconque des revendications 1 à 6, **caractérisé en ce que** ledit au moins un monomère A3 est choisi à raison de ≤ 20 % en poids dans le groupe comprenant l'acrylate d'hydroxyéthyle, le méthacrylate de 2-hydroxyéthyle, le méthacrylate de 2-(acétoacétoxy)éthyle, le méthacrylate de 2-uréidoéthyle, le diacétonacrylamide, le méthacrylate de glycidyle, le 3-(méthacryloyloxy)propyltriméthoxysilane, le vinyltriéthoxysilane, le méthacrylate d'allyle et le diacrylate de 1,4-butanediol.

**10.** Dispersion aqueuse de polymère pouvant être obtenue conformément à un procédé selon l'une quelconque des revendications 1 à 9.

**11.** Poudre de polymère pouvant être obtenue par séchage d'une dispersion aqueuse de polymère selon la revendication 10.

**12.** Utilisation d'une dispersion aqueuse de polymère selon la revendication 10 ou d'une poudre de polymère selon la revendication 11 comme liant lors de la fabrication d'adhésifs, de matières d'étanchéité, d'enduits en résine synthétique, de matières de couchage de papier, de non-tissés fibreux, de revêtements souples de toiture, et de peintures ainsi que lors de la consolidation de sable, comme composant lors de la fabrication d'adjuvants pour textiles ou cuirs et de modificateurs de résistance au choc ou dans la modification de liants minéraux et de matières plastiques.

**13.** Utilisation d'une dispersion aqueuse de polymère selon la revendication 10 ou d'une poudre de polymère selon la revendication 11, en tant que liant dans des formulations aqueuses anticorrosion pour surfaces métalliques.

**14.** Procédé pour le revêtement de surfaces métalliques, **caractérisé en ce qu'**une formulation aqueuse anticorrosion contenant une dispersion aqueuse de polymère selon la revendication 10 ou une poudre de polymère selon la revendication 11 est appliquée sur la surface métallique et ensuite séchée.

**15.** Formulation aqueuse anticorrosion contenant une dispersion aqueuse de polymère selon la revendication 10 ou

une poudre de polymère selon la revendication 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1193298 A
- WO 2016071326 A
- EP 0960889 A
- EP 2426155 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- WO 200917757 A
- WO 2009115607 A
- US 4269749 A
- US 2520959 A
- US 3397165 A


### In der Beschreibung aufgeführte Nicht-Patentliteratur


- hierzu Emulsionspolymerisation in Encyclopedia of Polymer Science and Engineering. 1987, vol. 8, 659
- **D.C. BLACKLEY.** *High Polymer Latices,* 1966, vol. 1, 35
- **H. WARSON.** The Applications of Synthetic Resin Emulsions. 1972, 246
- **D. DIEDERICH.** *Chemie in unserer Zeit 24,* 1990, 135-142
- Emulsion Polymerisation. Interscience Publishers, 1965
- **F. HÖLSCHER.** Dispersionen synthetischer Hochpolymerer. Springer-Verlag, 1969
- **T.G. FOX.** *Bull. Am. Phys. Soc.,* 1956, 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- **J. BRANDRUP, E.H. IMMERGUT.** Polymer Handbook. J. Wiley, 1975
- **J. BRANDRUP, E.H. IMMERGUT.** Polymer Handbook. J. Wiley, 1989
- Ullmann's Cncyclopedia of Industrial Chemistry. Verlag Chemie, 1992, 169
- **J. BRANDRUP ; E.H. IMMERGUT.** Polymerhandbook. John Wiley & Sons, 1989, 133-141
- Makromolekulare Stoffe. **HOUBEN-WEYL.** Methoden der organischen Chemie. Georg-Thieme-Verlag, 1961, 411-420
- Makromolekulare Stoffe. **HOUBEN-WEYL.** Methoden der organischen Chemie. Georg-Thieme-Verlag, 1961, 192-208
- Corrosion Inhibitors. An industrial Guide. William Andrew Inc